(19) Europäisches Patentamt / European Patent Office / Office européen des brevets

(11) **EP 2 891 985 A1**

(12) **EUROPEAN PATENT APPLICATION**
published in accordance with Art. 153(4) EPC

(43) Date of publication:
08.07.2015 Bulletin 2015/28

(51) Int Cl.:
*G06F 13/00* (2006.01)      *G06F 15/00* (2006.01)

(21) Application number: 13833114.5

(86) International application number:
PCT/JP2013/004850

(22) Date of filing: 13.08.2013

(87) International publication number:
WO 2014/034036 (06.03.2014 Gazette 2014/10)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 31.08.2012 JP 2012191260

(71) Applicant: NEC Corporation
Tokyo 108-8001 (JP)

(72) Inventors:
• MIKAMI, Sawako
Tokyo 108-8001 (JP)
• SATO, Tadashi
Tokyo 108-8001 (JP)
• KOBAYASHI, Yuji
Tokyo 108-8001 (JP)

(74) Representative: Robson, Aidan John
Reddie & Grose LLP
16 Theobalds Road
London WC1X 8PL (GB)

(54) **RULE DISTRIBUTION DEVICE, EVENT PROCESSING SYSTEM, RULE DISTRIBUTION METHOD, AND RULE DISTRIBUTION PROGRAM**

(57) Provided are a rule distribution apparatus, an event processing system, a rule distribution method, and a rule distribution program, with which it is possible to prevent bottlenecking of specific resources in a network, thereby maintaining high service quality. The distribution apparatus is equipped with: a rule receiving unit 11, which receives processing rules that specify an action requested by an application and specify an event condition for execution of the action; and an event generation unit 12, which generates sub-rules that determine all or a portion of one or more attribute conditions included in the event condition of the processing rule, or that change the timing for sending an event, and which generates configuration rules that include an event condition specifying the timing for registration of a sub-rule in a terminal sending an event, and which sends the configuration rules and the sub-rules to a processing apparatus that is capable of communicating with the terminal and is capable of executing the event processing.

Fig. 16

EP 2 891 985 A1

**Description**

[Technical Field]

The present invention relates to a rule distribution apparatus, an event processing system, a rule distribution method, and a rule distribution program, in which an event is processed in real time.

[Background Art]

There are event processing systems in which events sent from a plurality of devices (terminals) such as sensors are processed in real time. In an event processing system, a plurality of processing servers in the system execute event processing, requested by applications included in the servers and/or the like, by complex event processing (CEP). Specifically, a rule that defines event processing requested by each application and event condition for executing event processing (hereinafter referred to as a CEP rule or a processing rule) is registered in each processing server, and each processing server executes processing according to the CEP rule in parallel. Thus, the real-time processing of a large number of events is enabled.

An event, which is data sensed by a terminal, includes one or more attributes. The attributes include an attribute name that represents the kind of the data and an attribute value that represents a value of the data. For example, an event including four attributes: "ID", "type", "latitude", and "longitude" can be represented as follows:

{ID = car1, type = position, latitude = x1, longitude = y1}
in which "car1", "position", "x1", and "y1" represent attribute values for the respective attributes.

A rule includes an event condition and event processing (hereinafter referred to as an action) that specifies an operation in which the event condition is established, as mentioned above. The event condition includes not less than one attribute condition. The attribute condition includes an attribute name and an attribute value. For example, a rule including an event condition including three attribute conditions can be represented as follows.

[Event condition] type = position, latitude = x1, longitude = y1

[Action] Deliver content 1 to this terminal.

In this case, when the attribute value of the attribute "type" of an event sent from the terminal is "position", the attribute value of "latitude" is "x1", and the attribute value of "longitude" is "y1", an action "deliver content 1 to this terminal" is executed.

When a large amount of events are sent from a terminal, frequent communications between the terminal and a processing server are carried out. As a result, the loads of the terminal and a network are increased, and the terminal and the network may become bottlenecks. In such a case, an application is incapable of maintaining the quality of service. For example, the quality of service of an application, that requires understanding of the status of a user in real time (hereinafter referred to as a real time application), may be deteriorated when a data delay occurs. Thus, it is necessary in CEP to carry out dynamic, distributed parallel processing in quick response to fluctuations in the load of the terminal or the network.

There is a technology in which a terminal (in-vehicle apparatus) carried by a vehicle detects the status of the vehicle in itself to determine processing conditions, e.g., a task period and a message sending period, corresponding to the status of the vehicle (e.g., see Patent Literature 1). The in-vehicle apparatus described in Patent Literature 1 can prolong the sending period of a message to decrease the frequency of sending the message when the realization of the maximum performance is unnecessary. In addition, such an in-vehicle apparatus can set the frequency of sending a message so that performance corresponding to a vehicle status can berealized. Thus, the resources of the in-vehicle apparatus and a network can be prevented from being wasted.

[Citation List]

**[Patent Literature]**

Patent Literature 1: Japanese Patent Laid-Open No. 2010-262444

**[Summary of Invention]**

**[Technical Problem]**

However, a message sending period is determined by a destination, i.e., the kind of an application, and/or the like. Thus, when the destination application is dynamically changed, it is necessary to change the message sending period according to the application. The in-vehicle apparatus described in Patent Literature 1 is not able to change a message sending period arbitrarily, since processing conditions are determined uniquely depending on a vehicle status. Therefore, the in-vehicle apparatus described in Patent Literature 1 is incapable of handling a situation in which an application is dynamically changed.

In addition, a method as described below is conceivable as a method for eliminating a bottleneck in a network. That is, a method of extracting a rule, that can be processed in a terminal, among rules registered in a processing server from an application and configuring the extracted rule (hereinafter referred to as a sub-rule) in all terminals is conceivable as such a method. According to such a method, the number of events that are sent to a processing server by the terminal can be reduced, and therefore, a communication traffic volume between the terminal and the processing server can be reduced. However, a processing load for configuring a sub-rule in each terminal is increased by increasing the number of terminals. In addition, when the number of rules registered from the application is increased, each terminal consumes a large amount of memory resources to maintain the sub-rule. Thus, processing for configuring a sub-rule and a memory resource for storing a sub-rule may become bottlenecks.

Thus, an objective of the present invention is to provide a rule distribution apparatus, an event processing system, a rule distribution method, and a rule distribution program, which is cable of preventing a specified resource to be a bottleneck in a network , and maintaining the high quality of service.

**[Solution to Problem]**

A rule distribution apparatus according to the present invention includes: a rule receiving unit that receives a processing rule that defines an action requested by an application and an event condition for executing the action; and a rule generation unit that generates a sub-rule for judging a part or all of not less than one attribute condition included in an event condition in the processing rule or for changing timing at which an event is sent, generates a configuration rule including an event condition that specifies timing at which the sub-rule is registered in a terminal to which an event is sent, and sends the configuration rule and the sub-rule to a processing apparatus that can communicate with the terminal and can execute an event process.

An event processing system according to the present invention includes: a rule distribution apparatus; and a processing apparatus that can communicate with a terminal and can execute an event process, wherein the rule distribution apparatus includes: a rule receiving unit that receives a processing rule that defines an action requested by an application and an event condition for executing the action; and a rule generation unit that generates a sub-rule for judging a part or all of not less than one attribute condition included in the event condition of the processing rule or for changing timing at which an event is sent, generates a configuration rule including an event condition that specifies timing at which the sub-rule is registered in the terminal to which the event is sent, and sends the configuration rule and the sub-rule to the processing apparatus; and the processing apparatus includes a control unit that executes a processing for matching an event of which a notification is provided by the terminal according to an event condition in the configuration rule and sends the sub-rule to the terminal when the event matches the event condition.

A rule distribution method according to the present invention includes: receiving a processing rule that defines an action requested by an application and an event condition for executing the action; and generating a sub-rule for judging a part or all of not less than one attribute condition included in an event condition in the processing rule or for changing timing at which an event is sent, generating a configuration rule including an event condition that specifies timing at which the sub-rule is registered in a terminal to which an event is sent, and sending the configuration rule and the sub-rule to a processing apparatus that can communicate with the terminal and can execute an event process.

A rule distribution program according to the present invention includes allowing a computer to execute: a processing of receiving a processing rule that defines an action requested by an application and an event condition for executing the action; and a processing of generating a sub-rule for judging a part or all of not less than one attribute condition included in an event condition in the processing rule or for changing timing at which an event is sent, generating a configuration rule including an event condition that specifies timing at which the sub-rule is registered in a terminal to which an event is sent, and sending the configuration rule and the sub-rule to a processing apparatus that can communicate with the terminal and can execute an event process.

**[Advantageous Effects of Invention]**

In accordance with the present invention, a specified resource can be prevented from becoming a bottleneck in a network , and the high quality of service can be maintained.

**[Brief Description of Drawings]**

[Fig. 1] Fig. 1 is a block diagram illustrating the configuration of the first exemplary embodiment of an event processing system including a rule distribution apparatus according to the present invention.

[Fig. 2] Fig. 2 is a block diagram illustrating the configuration of the first exemplary embodiment of the rule distribution apparatus.

[Fig. 3] Fig.3 is a block diagram illustrating an example of the configuration of a terminal.

[Fig. 4] Fig. 4 is an explanatory drawing illustrating the scheme of the event processing system applied to coupon delivery service.

[Fig. 5] Fig. 5 is a sequence diagram illustrating the operation of the event processing system according to the first exemplary embodiment.

[Fig. 6] Fig. 6 is an explanatory drawing illustrating the scheme of the event processing system applied to approach notification service.

[Fig. 7] Fig. 7 is a sequence diagram illustrating the operation of an event processing system according to the second exemplary embodiment.

[Fig. 8] Fig. 8 is an explanatory drawing illustrating the scheme of service for prior notification of a dangerous place.

[Fig. 9] Fig. 9 is a sequence diagram illustrating the operation of an event processing system according to the third exemplary embodiment in registration of a CEP rule.

[Fig. 10] Fig. 10 is a flowchart illustrating a processing of generating a configuration rule and a sub-rule for execution in step S502.

[Fig. 11] Fig. 11 is a sequence diagram illustrating the operation of the event processing system according to the third exemplary embodiment in reception of a danger event.

[Fig. 12] Fig. 12 is a block diagram illustrating the configuration of the fourth exemplary embodiment of an event processing system including a rule distribution apparatus according to the present invention.

[Fig. 13] Fig. 13 is an explanatory drawing illustrating the scheme of service for prior notification of a dangerous place, providing a danger notification via a base station.

[Fig. 14] Fig. 14 is a sequence diagram illustrating the operation of the event processing system according to the fourth exemplary embodiment in reception of a danger event.

[Fig. 15] Fig. 15 is a sequence diagram illustrating the operation of the event processing system according to the fourth exemplary embodiment in new joining of a terminal.

[Fig. 16] Fig. 16 is a block diagram illustrating the minimum configuration of the rule distribution apparatus according to the present invention.

[Fig. 17] Fig. 17 is a block diagram illustrating the other minimum configuration of the rule distribution apparatus according to the present invention.

[Fig. 18] Fig. 18 is a block diagram illustrating the minimum configuration of the event processing system according to the present invention.

**[Description of Embodiments]**

(Exemplary Embodiment 1)

The first exemplary embodiment of the present invention will be explained below with reference to the drawings.

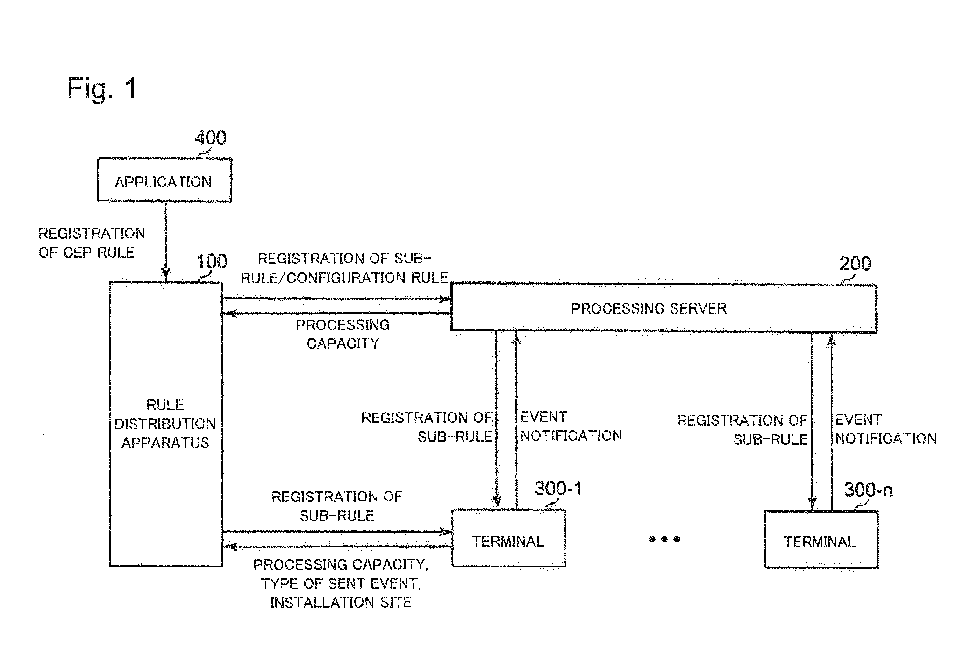

Fig. 1 is a block diagram illustrating an example of the configuration of the event processing system including the rule distribution apparatus according to the present invention.

The event processing system according to the present invention includes a rule distribution apparatus 100 and a processing server 200. As illustrated in Fig. 1, the event processing system is communicatably connected to terminals 300-1 to 300-n. In addition, the event processing system is communicatably connected to an application 400. Although one processing server is illustrated in Fig. 1, there may be any number of processing servers. Although one application is illustrated in Fig. 1, there may be any number of applications.

The rule distribution apparatus 100 acquires prior information from the processing server 200 and the terminals 300-1 to 300-n. Specifically, the rule distribution apparatus 100 acquires information representing the processing capacity of the processing server 200 from the processing server 200. The rule distribution apparatus 100 acquires information representing the processing capacity of each terminal, the type of an event sent from each terminal, and the installation site (place) of each terminal from the terminals 300-1 to 300-n.

When the rule distribution apparatus 100 receives a CEP rule from the application 400, the rule distribution apparatus 100 generates a configuration rule and a sub-rule based on the received CEP rule and the acquired prior information. The configuration rule is a rule that defines a terminal, in which the sub-rule is configured, and a timing, at which the sub-rule is configured. The rule distribution apparatus 100 sends the configuration rule to the processing server 200. The sub-rule is a rule that defines event processing in the terminals.

The processing server 200 includes a control unit (not illustrated). The control unit is implemented by a CPU and the like, included in the processing server 200. Hereinafter, processing by the control unit in the processing server 200 is simply expressed as processing by the processing server 200. The processing server 200 registers the received configuration rule, in the apparatus itself. The processing server 200 acquires a sub-rule corresponding to the configuration rule from the rule distribution apparatus 100 and maintains the sub-rule.

The processing server 200 registers the sub-rule in the terminals 300-1 to 300-n based on the configuration rule. Specifically, the processing server 200 judges the event condition of the configuration rule based on an event received from each terminal. When the received event matches the event condition of the configuration rule, the processing server 200 executes the action of the configuration rule. In other words, the processing server 200 sends the sub-rule to the terminals.

The terminals 300-1 to 300-n registers the received sub-rule in the terminals in themselves. The terminals 300-1 to 300-n provides an event notification to the processing server 200 according to the sub-rule. In addition, the terminals 300-1 to 300-n executes event processing according to the sub-rule

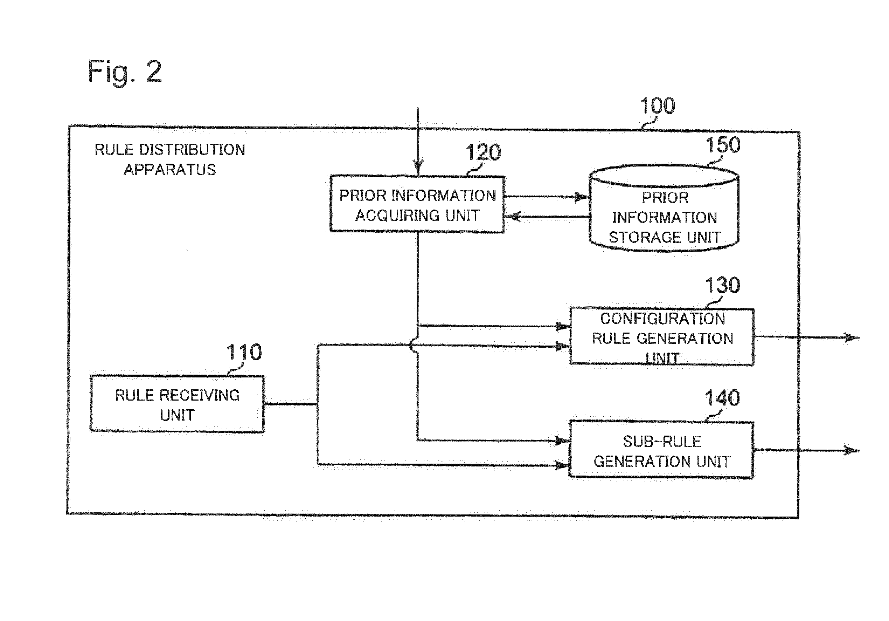

Fig. 2 is a block diagram illustrating the configuration of the first exemplary embodiment of the rule distribution apparatus 100.

As illustrated in Fig. 2, the rule distribution apparatus 100 includes a rule receiving unit 110, a prior information acquiring unit 120, a configuration rule generation unit 130, a sub-rule generation unit 140, and a prior information storage unit 150.

The rule receiving unit 110 receives a CEP rule from the application 400.

The prior information acquiring unit 120 acquires prior information from the processing server 200 and the terminals 300-1 to 300-n. The prior information acquiring unit 120 stores the acquired prior information in the prior information storage unit 150.

The configuration rule generation unit 130 generates a configuration rule based on the CEP rule received by the rule receiving unit 110 and on the prior information stored in the prior information storage unit 150. The configuration rule generation unit 130 sends the configuration rule to the processing server 200.

The sub-rule generation unit 140 generates a sub-rule based on the CEP rule received by the rule receiving unit 110 and on the prior information stored in the prior information storage unit 150. The sub-rule generation unit 140 sends the sub-rule to the processing server 200.

The prior information storage unit 150 maintains the prior information received from the prior information acquiring unit 120. A user or the like may allow prior information to be stored in the prior information storage unit 150 beforehand.

The rule receiving unit 110, the prior information acquiring unit 120, the configuration rule generation unit 130, and the sub-rule generation unit 140 are implemented by a CPU and the like, included in the rule distribution apparatus 100. For example, the CPU reads a rule distribution program stored in a computer-readable recording medium. The CPU may also operate as the rule receiving unit 110, the prior information acquiring unit 120, the configuration rule generation unit 130, and the sub-rule generation unit 140 according to the rule distribution program. The prior information storage unit 150 is implemented by a memory apparatus, such as a memory, included in the rule distribution apparatus 100.

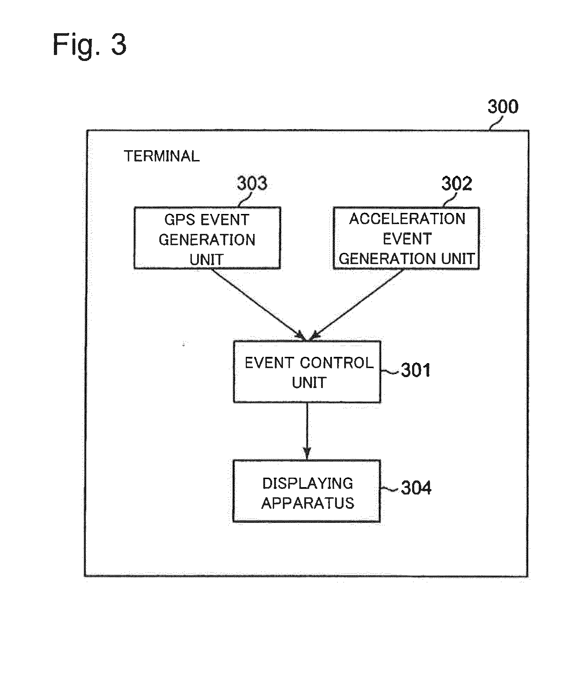

Fig. 3 is a block diagram illustrating an example of the configuration of a terminal.

As illustrated in Fig. 3, the terminal 300 (300-1 to 300-n) includes an event control unit 301, an acceleration event generation unit 302, a GPS (Global Positioning System) event generation unit 303, and a displaying apparatus 304.

The event control unit 301 carries out a matching process (processing) for an event, of which a notification is provided from the acceleration event generation unit 302 and the GPS event generation unit 303, based on a sub-rule registered in the terminal itself.

The event control unit 301, for example, sends image information for displaying an alert screen to the displaying apparatus 304 according to the result of the matching process.

The acceleration event generation unit 302 includes an acceleration sensor (not illustrated) and detects a danger such as hard braking an the like, based on acceleration data acquired from the acceleration sensor. The acceleration event generation unit 302 notifies the event control unit 301 of an event including danger information (hereinafter referred to as a danger event) when detecting the danger. The danger information is information representing, for example, the kind of the danger or a position where the danger occurs.

The GPS event generation unit 303 acquires the positional information of the terminal itself utilizing the GPS. The GPS event generation unit 303 regularly or intermittently notifies the event control unit 301 of an event including positional information (hereinafter referred to as a positional event). The positional event includes the positional information and ID information by which the terminal itselfmay be identified.

The displaying apparatus 304 is, for example, an apparatus that realizes display function.

The event control unit 301, the acceleration event generation unit 302, and the GPS event generation unit 303 are implemented by a CPU included in the terminal 300, and the like.

The terminal 300 may also include an output apparatus other than the displaying apparatus. In the present exemplary embodiment, the terminal 300 includes the acceleration event generation unit and the GPS event generation unit as event generation units; however, the terminal 300 may include only any one of the event generation units or include an event generation unit other than the event generation units.

The operation of the present exemplary embodiment will be explained below.

In the present exemplary embodiment, a case in which the event processing system is applied to coupon delivery service is taken as an example.

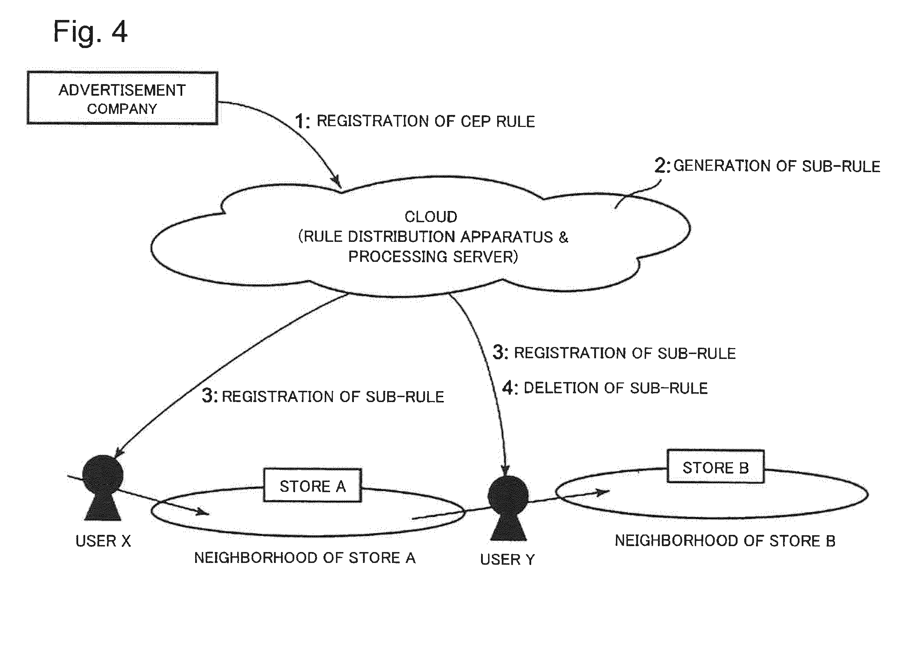

Fig. 4 is an explanatory drawing illustrating the scheme of the event processing system applied to coupon delivery service. The coupon delivery service is service in which when a user carrying a terminal approaches a store, a coupon is delivered as advertisement information for the store to the terminal of the user.

As illustrated in Fig. 4, an advertisement company which is the source of delivery of the coupon, registers a CEP rule corresponding to each store in a rule distribution apparatus installed on a cloud (cloud computing system).

The processing server installed on the cloud executes the registration and deletion of a sub-rule, for a terminal to notify the server of positional information, according to a configuration rule received from the rule distribution apparatus, as described below. When the user is approaching the store, the processing server registers a sub-rule corresponding to the store in the terminal of the user. When the user is leaving the store, the processing server deletes the sub-rule corresponding to the store from the terminal of the user.

In Fig. 4, a user X is approaching a store A. Thus, the processing server registers the sub-rule corresponding to the store A in the terminal of the user X. In addition, a user Y is leaving the store A and approaching a store B. Thus, the processing server deletes the sub-rule corresponding to the store A from the terminal of the user Y and registers a sub-rule corresponding to the store B in the terminal of the user Y.

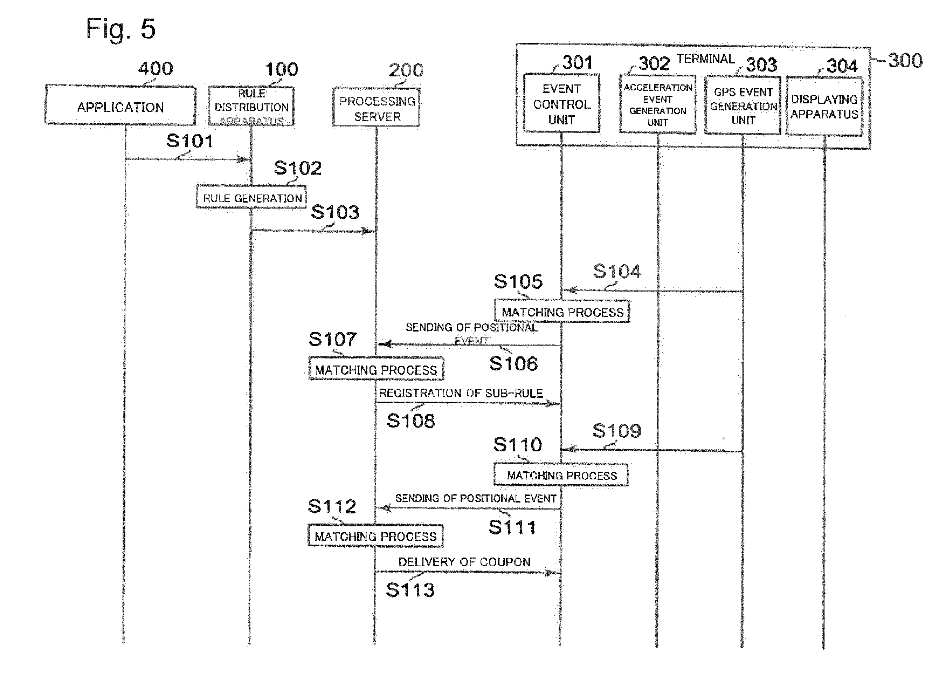

Fig. 5 is a sequence diagram illustrating the operation of the event processing system according to the first exemplary embodiment. Although one terminal 300 is illustrated in Fig. 5, there may be any number of terminals.

The rule distribution apparatus 100 generates a configuration rule, a sub-rule, and a deletion rule (step S102) when a CEP rule is registered from the application (step S101). In the present exemplary embodiment, the rule distribution apparatus 100 generates a sub-rule for notification as the sub-rule. The sub-rule for notification is a rule for the terminal to notify the processing server 200 of an event needed for judging the event condition of the configuration rule.

An example of the CEP rule registered in step S101 as well as the configuration rule, the deletion rule, and the sub-rule for notification generated from the CEP rule is described below.

(a) CEP Rule

[Event Condition] A <positional event: position> is not more than 300 m (meters) from a store A.

[Action] A coupon is delivered to a <positional event: id>.

(b) Configuration Rule

[Event Condition] A <positional event: position> is not more than 1300 m from a store A.

[Action] A sub-rule for notification is set to a <positional event: id>, and a deletion rule is set to a processing server.

(c) Sub-rule for Notification

[Event Condition] A <positional event: position> is not more than 300 m from a store A.

[Action] Deliver to processing server

(d) Deletion Rule

[Event Condition] A <positional event: position> is 1300 m apart from a store A.

[Action] A sub-rule for notification to be deleted is deleted from a <positional event: id>.

In the present exemplary embodiment, the (a) is an example of the CEP rule registered by the application. "A <positional event: position> is not more than 300 m from a store A" is a condition for judging whether the position (distance) represented by the attribute value of the attribute "position" of the positional event is not more than 300 m (meters) from the store A. Hereinafter, an attribute condition including a range specification as described above is referred to as "range specification attribute condition". Information representing the position of the store A is pre-stored in a storage unit (not illustrated) included in the processing server 200.

The (b) is an example of the configuration rule generated from the CEP rule represented in the (a). The rule distribution apparatus 100 sets the event condition of the configuration rule so that the specified range of the range specification attribute condition included in the event condition is wider than that of the CEP rule. In this case, the rule distribution apparatus 100 sets the specified range of the range specification attribute condition in the event condition of the configuration rule to "not more than 1300 m", that is wider than "not more than 300 m".

The (c) is an example of the sub-rule for notification corresponding to the configuration rule represented in the (b).

The (d) is an example of the deletion rule.

The configuration of the configuration rule, the sub-rule for notification, and the deletion rule is a configuration similar to that of the CEP rule. The action "a sub-rule for notification is deleted from a <positional event: id>" represents a processing of deleting a sub-rule for notification registered in the terminal corresponding to the attribute value of the attribute "id" of the positional event, i.e., the terminal of the source of the positional event. The sub-rule for notification to be deleted may be specified by an identifiable ID (Identification) or the like, which is able to identify the sub-rule for notification. In the present exemplary embodiment, the sub-rule (c) for notification is specified as the sub-rule to be deleted.

The rule distribution apparatus 100 sends the CEP rule, the configuration rule, and the sub-rule for notification and deletion rule corresponding to the configuration rule to the processing server 200 (step S103). In this case, the processing server 200 registers the CEP rule and the configuration rule in the apparatus itself. As a result, the processing server 200 becomes in the status of being capable of executing the CEP rule and the configuration rule. In addition, the processing server 200 maintains(stores) the sub-rule for notification and the deletion rule.

Whenever a positional event is sent from the GPS event generation unit 303, the event control unit 301 of the terminal 300 carries out a processing of matching (matching process) the positional event against the event condition of a sub-rule for initial operation (steps S104 and S105). The sub-rule for initial operation is pre-registered as a second sub-rule in each terminal by the application when the application is started. Further, the rule distribution apparatus 100 may also generate the sub-rule for initial operation from the CEP rule to configure the generated sub-rule for initial operation in each terminal. The rule distribution apparatus 100 determines the terminal, in which the sub-rule for initial operation is registered, based on, for example, the prior information stored in the prior information storage unit 150. An example of the sub-rule for initial operation is described below. The configuration of the sub-rule for initial operation is a configuration similar to that of the CEP rule.

(e) Sub-rule for Initial Operation

[Event Condition] Positional event

[Action] Deliver to a processing server at intervals of 5 minutes.

When the positional event matches the event condition of the sub-rule for initial operation, i.e., in the case of a lapse of 5 minutes after previous sending of the positional event, the event control unit 301 sends the positional event to the processing server 200 (step S106).

The processing server 200 carries out a processing of matching (matching process) the received positional event against the event condition of the configuration rule (step S107).

When the positional event matches the event condition of the configuration rule (for example, when the position of the terminal 300 is within 1300 m from the store A), the processing server 200 registers a sub-rule for notification in the terminal 300 which is the source of sending of the positional event (step S108). In this case, the processing server 200 registers a deletion rule to the own apparatus according to the configuration rule.

After step S108, whenever a positional event is sent from the GPS event generation unit 303, the event control unit 301 of the terminal 300 carries out a processing of matching the positional event against the event condition of the sub-rule for notification (steps S109 and S110).

When the positional event matches the event condition of the sub-rule for notification, i.e., when the position of the terminal 300 is within 300 m from the store A, the event control unit 301 sends the positional event to the processing server 200 (step S111).

The processing server 200 carries out a processing of matching the received positional event against the event condition of the CEP rule (step S112). In this case, the position of the terminal 300 is within 300 m from the store A, the processing server 200 executes the action of the CEP rule. As a result, the coupon of the store A is delivered from the processing server 200 to the terminal 300 which is the source of sending of the positional event (step S113).

After step S113, the processing server 200 carries out a processing of matching the positional event, received from the terminal 300, against the event condition of the deletion rule. When the positional event matches the event condition of the deletion rule, i.e., when the position of the terminal 300 is 1300 m or more apart from the store A, the processing server 200 executes the action of the deletion rule. In other words, the processing server 200 deletes the sub-rule for notification registered in the terminal 300 which is the source of sending of the positional event.

An operation in the case of issuing a request to delete a CEP rule from a user to the rule distribution apparatus 100 will now be explained below.

The rule distribution apparatus 100 deletes the CEP rule registered in the own apparatus when the rule distribution apparatus 100 receives the request to delete the CEP rule, from the user, specifically when a rule deletion unit (not illustrated) included in the rule distribution apparatus 100 receives the request to delete the CEP rule. In addition, the rule deletion unit of the rule distribution apparatus 100 sends a request to delete the CEP rule and a configuration rule corresponding to the CEP rule to the processing server 200.

The processing server 200 deletes the CEP rule and the configuration rule registered in the own apparatus according to the request of the rule distribution apparatus 100. The processing server 200 deletes each rule and thereafter sends a request to delete a sub-rule for notification to each terminal. The rule deletion unit of the rule distribution apparatus 100 may send the request to delete the sub-rule for notification to each terminal.

Each terminal deletes the sub-rule for notification according to the request of the processing server 200.

As described above, when the CEP rule is deleted from the rule distribution apparatus 100, each rule corresponding to the CEP rule registered in the processing server 200 and each terminal is deleted.

As explained above, in the present exemplary embodiment, the rule distribution apparatus controls the processing of the processing server and the terminal in the event processing system using the configuration rule and the sub-rule for notification generated based on the CEP rule registered by the application. In addition, whenever the CEP rule is registered, the rule distribution apparatus generates the configuration rule and sub-rule for notification according to the content of the CEP rule and registers each rule in the processing server and the terminal. Thus, dynamic, distributed parallel processing can be implemented in CEP.

The processing server configures the sub-rule for notification only to the terminal, of a user, in the status (situation) of seeming to match the event condition of the CEP rule according to the configuration rule. Thus, according to the present exemplary embodiment, an unnecessary event can be inhibited from being sent from a terminal that does not seem to match the event condition, and therefore, the number of communications between the terminal and the processing server can be minimized. Thus, the CEP rule can be executed without increasing the loads of the terminals, the processing server, and the network.

According to the present exemplary embodiment, it is not necessary for the processing server to configure the sub-rule for notification in all the terminals, and therefore, the load of the processing server can be reduced. According to the status of a terminal, for example, the positional relationship between the terminal and the store, only the minimum sub-rule needed in the terminal in the status is registered in the terminal. As a result, the memory consumption amount of the terminal can be reduced. Since it is applicable that the terminal executes only the minimum sub-rule, the CPU resource consumption amount of the terminal can be reduced. Thus, a resource in a network can be prevented from becoming a bottleneck, and the high quality of service can be maintained.

In the present exemplary embodiment, when the distance between a terminal and the store becomes not less than a predetermined distance, the sub-rule for notification corresponding to the CEP rule is deleted from the terminal. The memory consumption amount and CPU resource consumption amount of the terminal can be more reduced by deleting the sub-rule for notification from the terminal when matching process according to the sub-rule for notification is not needed in the terminal. The case of deleting the sub-rule for notification based on the distance (position) between the terminal and the store is taken as an example in the present exemplary embodiment; however, for example, the sub-rule for notification may also be deleted based on time elapsing after the delivery of the coupon to the terminal.

In the present exemplary embodiment, when the CEP rule was deleted from the rule distribution apparatus, each rule corresponding to the CEP rule registered in the processing server 200 and each terminal is deleted. Thus, the memory consumption amounts and CPU resource consumption amounts of the processing server and the terminal can be more reduced.

A case in which a store is monitored is taken as an example in the exemplary embodiment; however, a fixed area other than stores may be monitored without limitation to the stores.

(Exemplary Embodiment 2)

The second exemplary embodiment of the present invention will be explained below with reference to the drawings.

Since the configuration of the second exemplary embodiment of the event processing system is similar to the configuration of the first exemplary embodiment, an explanation thereof is omitted.

A case in which an event processing system is applied to approach notification service will now be taken as an example.

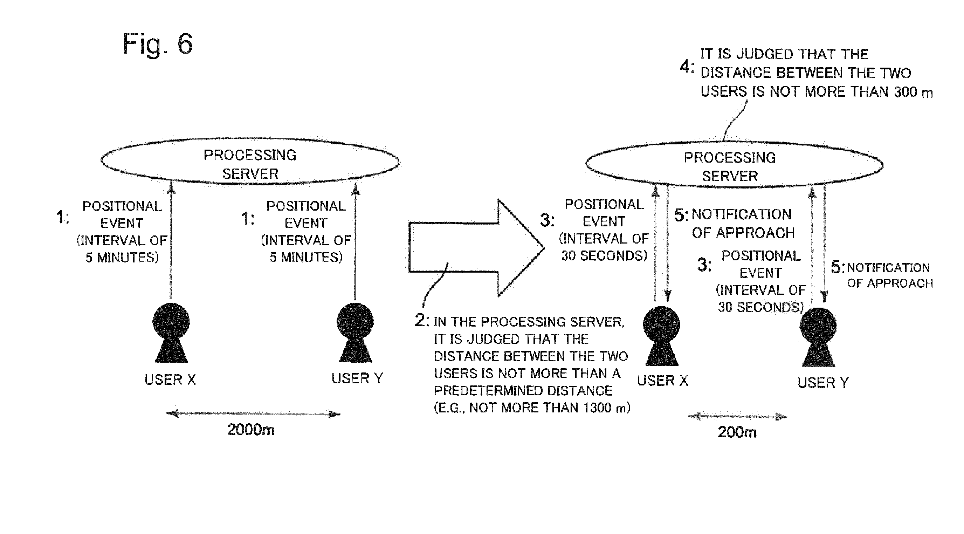

Fig. 6 is an explanatory drawing illustrating the scheme of the event processing system applied to approach notification service. The approach notification service is service in which when users carrying terminals approach each other at not more than a predetermined distance, an approach notification indicating that the terminals approach each other is sent to the terminal of each user. Fig. 6 illustrates a state (situation) in which the approach notification is sent when the distance between a user X and a user Y becomes not more than 300 m.

As illustrated in Fig. 6, first, the respective terminals (hereinafter simply referred to as a user X and a user Y) carried by the users X and Y send positional events to a processing server at predetermined timing. In this case, the users X and Y send the positional events at intervals of 5 minutes.

The processing server judges whether or not the distance between the user X and the user Y is not more than a predetermined distance, for example, not more than 1300 m, based on the positional event received from each user. The processing server changes the interval, at which the positional event of each user is sent, to 30 seconds, which is shorter than 5 minutes, when the distance between the user X and the user Y becomes not more than the predetermined distance.

The processing server judges whether or not the distance between the user X and the user Y became not more than 300 m based on the positional event sent from each user at intervals of 30 seconds. When the distance between the user X and the user Y is not more than 300 m, the processing server notifies each user that the other user is approached. As a result, the users X and Y can recognize whether or not one user approaches the other.

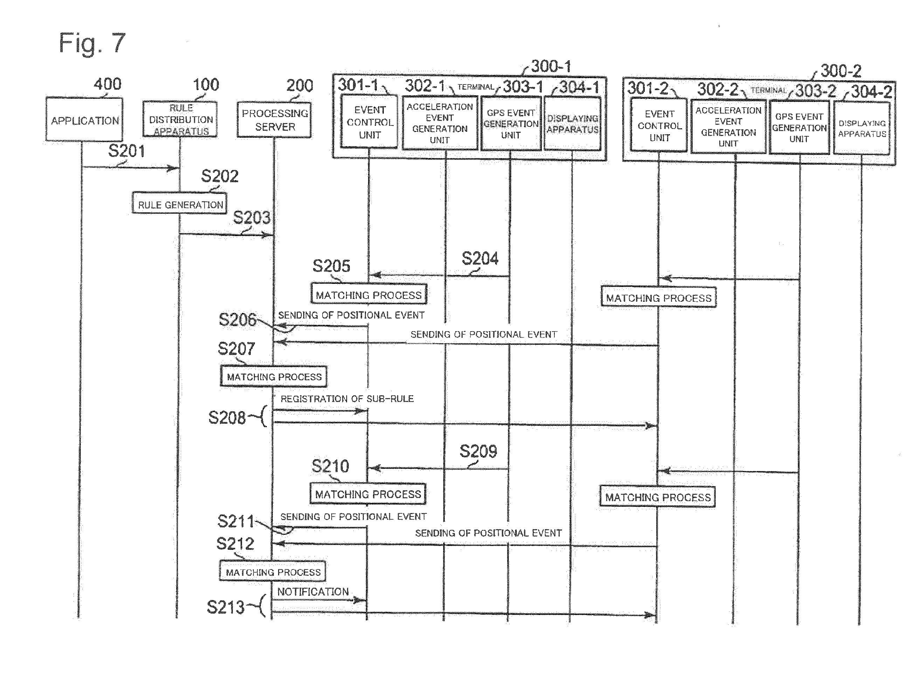

Fig. 7 is a sequence diagram illustrating the operation of the event processing system according to the second exemplary embodiment.

The operation of the event processing system will now be explained by taking the case of sending an approach notification to a terminal 300-1 and a terminal 300-2 as an example. Although the two terminals 300-1 and 300-2 are illustrated in Fig. 7, there may be any number of terminals.

A rule distribution apparatus 100 generates a configuration rule, a sub-rule, and a deletion rule (step S202) when a CEP rule is registered by an application (step S201). In the present exemplary embodiment, the rule distribution apparatus 100 generates a sub-rule for notification as the sub-rule as in the case of the first exemplary embodiment.

An example of the CEP rule registered in step S201 as well as the configuration rule, the sub-rule for notification, and the deletion rule generated from the CEP rule is described below.

(f) CEP Rule

[Event Condition] A distance between a <positional event 1: position> and a <positional event 2: position> is not more than 300 m.

[Action] A notification of approaching a <positional event 1: id> and a <positional event 2: id> is made.

(g) Configuration Rule

[Event Condition] A distance between a <positional event 1: position> and a <positional event 2: position> is not more than 1300 m.

[Action] A sub-rule for notification is set at a <positional event: id>, and a deletion rule is set in a processing server.

(h) Sub-rule for Notification

[Event Condition] Positional event

[Action] Deliver to a processing server at intervals of 30 seconds.

(i) Deletion Rule

[Event Condition] A distance between a <positional event 1: position> and a <positional event 2: position> is more than 1300 m.

[Action] A sub-rule for notification to be deleted is deleted from a <positional event: id>.

In this case, "positional event 1" in each rule represents a positional event sent from the terminal 300-1 while "positional event 2" represents a positional event sent from the terminal 300-2.

In the present exemplary embodiment, the (f) is an example of the CEP rule registered by the application. "A distance between a <positional event 1: position> and a <positional event 2: position> is not more than 300 m" is a condition for judging whether or not the difference between the attribute value of the attribute "position" of a positional event sent by the terminal 300-1 and the attribute value of the attribute "position" of the positional event sent by the terminal 300-2 is not more than 300 m.

The (g) is an example of the configuration rule generated from the CEP rule described in the (f). The (h) is an example of the sub-rule for notification corresponding to the configuration rule described in the (g).

The (i) is an example of the deletion rule. In the present exemplary embodiment, the sub-rule (h) for notification is specified as a target for deletion.

The rule distribution apparatus 100 sends the CEP rule, the configuration rule, and the sub-rule for notification and the deletion rule corresponding to the configuration rule to a processing server 200 (step S203). In this case, the processing server 200 registers the CEP rule and the configuration rule in the own apparatus. In addition, the processing server 200 maintains (stores) the sub-rule for notification and the deletion rule.

Whenever a positional event is sent from the GPS event generation unit, the event control units of the terminals 300-1 and 300-2 carry out a processing of matching (patching process) the positional event against the event condition of a sub-rule for initial operation (steps S204 and S205). The sub-rule for initial operation is pre-registered in each terminal by the application when the application is started. In this case, it is assumed that the sub-rule for initial operation described in the above (e) is registered in each terminal. The rule distribution apparatus 100 may also generate the sub-rule for initial operation from the CEP rule and configure the generated sub-rule for initial operation in each terminal.

When the positional event matches the event condition of the sub-rule for initial operation, i.e., in the case of a lapse of 5 minutes after previous sending of the positional event, the event control unit of each terminal sends the positional event to the processing server 200 (step S206).

The processing server 200 carries out a processing of matching the positional event received from each terminal against the event condition of the configuration rule (step S207).

When the positional event received from each terminal matches the event condition of the configuration rule (for example, the distance between the terminal 300-1 and the terminal 300-2 which are the sources of sending of the positional events is not more than 1300 m), the sub-rule for notification is registered in the terminals 300-1 and 300-2 which are the sources of sending of the respective positional events (step S208). In this case, the processing server 200 registers a deletion rule in the own apparatus.

After step S208, whenever a positional event is sent from the GPS event generation unit, the event control units of the terminals 300-1 and 300-2 carry out a processing of matching the positional event against the event condition of the sub-rule for notification (steps S209 and S210).

When the positional event of which the notification is provided from the GPS event generation unit matches the event condition of the sub-rule for notification (for example, in the case of a lapse of 30 seconds after previous sending of the positional event), the event control unit of each terminal sends the positional event to the processing server 200 (step S211).

The processing server 200 carries out a processing of matching the positional event received from each terminal against the event condition of the CEP rule (step S212).

When the positional event received from each terminal matches the event condition of the CEP rule (for example, when the distance between the terminal 300-1 and the terminal 300-2 which are the sources of sending of the positional event is not more than 300 m), the processing server 200 executes the action of the CEP rule (step S213). As a result, an approach notification is sent to the terminals 300-1 and 300-2.

After step S213, the processing server 200 carries out a processing of matching the positional event received from each terminal against the event condition of the deletion rule. When the positional event received from each terminal matches the event condition of the deletion rule, i.e., when the terminal 300-1 and the terminal 300-2 are 1300 m or more apart from each other, the processing server 200 executes the action of the deletion rule. In other words, the processing server 200 deletes the sub-rule for notification registered in the terminals 300-1 and 300-2 which are the sources of sending of the positional event.

Since the operations of the rule distribution apparatus 100, the processing server 200, and each terminal in the case of issuing a request to delete a CEP rule from a user to the rule distribution apparatus 100 are similar to those in the first exemplary embodiment, an explanation thereof is omitted.

As explained above, in the present exemplary embodiment, the processing server sends an approach notification to each terminal when the terminals approach each other at not more than a predetermined distance. As a result, a user carrying a terminal can recognize whether or not another user approaches the user. In the coupon delivery service according to the first exemplary embodiment, the position of one (store) to be monitored is fixed. In the present exemplary embodiment, even in service in which the position of one to be monitored is not fixed, i.e., even in service in which the positions of both to be monitored are not fixed, the CEP rule can be executed without increasing the loads of the terminals, the processing server, and the network.

(Exemplary Embodiment 3)

The third exemplary embodiment of the present invention will be explained below with reference to the drawings.

Since the configuration of the third exemplary embodiment of the event processing system is similar to the configuration of the first exemplary embodiment, an explanation thereof is omitted.

A case in which an event processing system is applied to service for prior notification of a dangerous place will now be taken as an example.

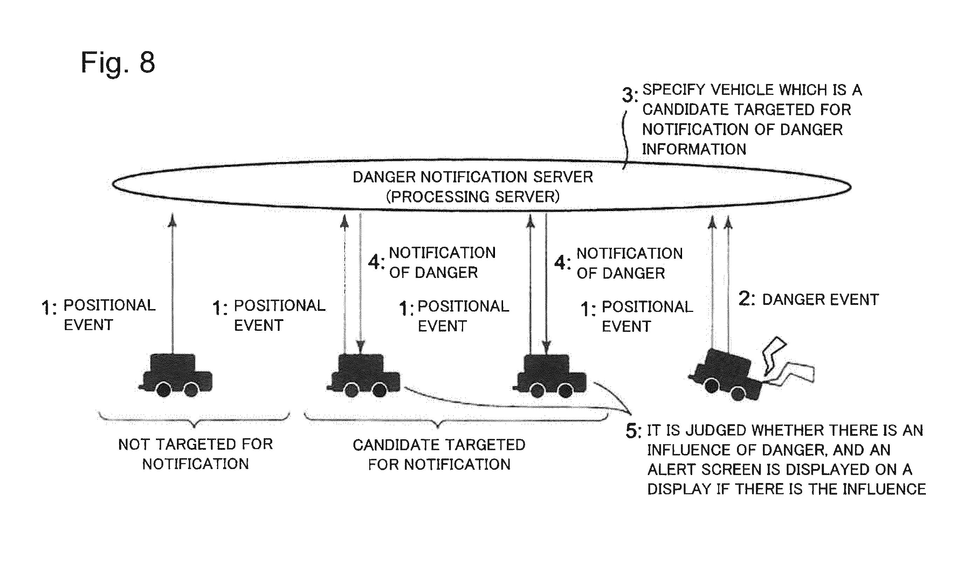

Fig. 8 is an explanatory drawing illustrating the scheme of the service for prior notification of a dangerous place.

First, the scheme of the service for prior notification of a dangerous place is explained with reference to Fig. 8.

Each vehicle illustrated in Fig. 8 includes each terminal illustrated in Fig. 3. The terminal (hereinafter simply referred to as a vehicle) carried by the vehicle sends a positional event to a danger notification server.

Each vehicle judges whether or not the vehicle itself is in a dangerous state, and sends a danger event to the danger notification server. Each vehicle judges that the vehicle is dangerous, for example, in a case in which a driver brakes suddenly, or in a case in which the vehicle detects a cave-in in a road.

The danger notification server specifies a vehicle that is a candidate targeted for the notification of danger information (hereinafter referred to as a candidate vehicle targeted for notification) when receiving the danger event from the vehicle that has detected a danger (hereinafter referred to as a danger detection vehicle). The danger notification server regards, for example, the vehicle of which the distance between the danger detection vehicle and another vehicle is not more than a predetermined distance (hereinafter referred to as a danger judgment distance) as a candidate targeted for notification. The processing server 200 sends a danger notification to the specified candidate vehicle targeted for notification. As a result, the danger detection vehicle can inform other vehicles in a neighboring area of a danger.

The candidate vehicle targeted for notification, receiving the danger notification, judges whether or not the vehicle itself is influenced by the danger based on the distance between the vehicle itself and the danger detection vehicle. When it is judged that there is the influence of the danger, a driver is notified of the danger. For example, the candidate vehicle targeted for notification displays an alert screen as information for notification of the danger on a displaying apparatus such as a display carried by the vehicle.

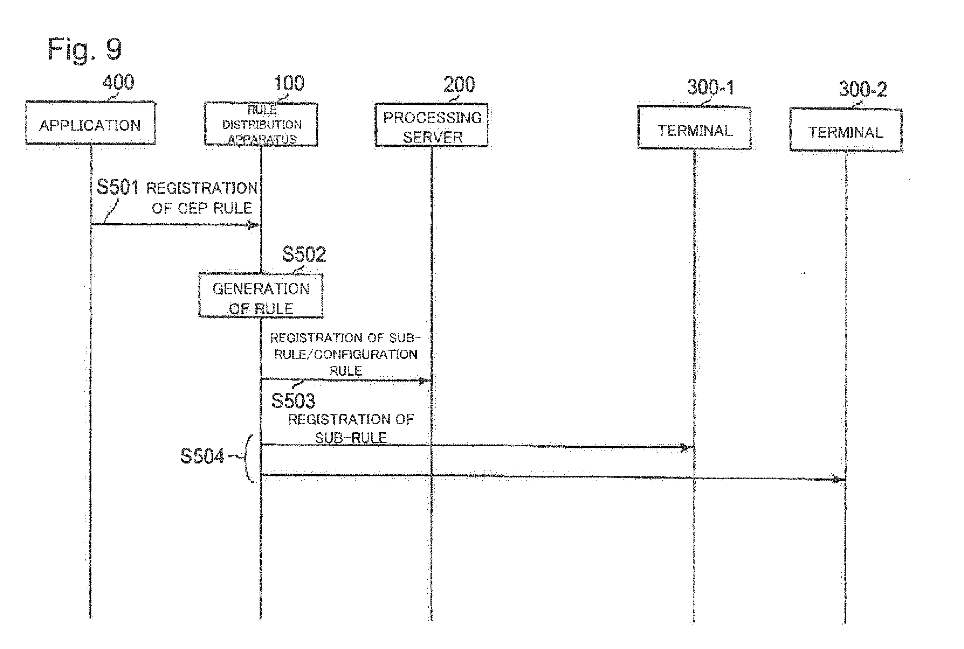

The operation of the event processing system applied to service for prior notification of a dangerous place in registration of a CEP rule will be explained below with reference to Fig. 9.

Fig. 9 is a sequence diagram illustrating the operation of the event processing system according to the third exemplary embodiment in the registration of the CEP rule. Although two terminals 300-1 and 300-2 are illustrated in Fig. 9, there may be any number of terminals.

In the present exemplary embodiment, the event processing system adjusts the interval of sending of a positional event sent from a vehicle to the danger notification server (processing server 200) using a configuration rule, a sub-rule for execution, and a sub-rule for notification.

When a CEP rule is registered from an application 400 (step S501), a rule distribution apparatus 100 generates a configuration rule and sub-rules (step S502). In the present exemplary embodiment, the rule distribution apparatus 100 generates a sub-rule for execution and a sub-rule for notification as the sub-rules. The sub-rule for execution is a rule for allowing a terminal to execute an event processing defined in the CEP rule.

An example of the CEP rule registered in step S501 as well as the configuration rule, the sub-rule for execution, and the sub-rule for notification generated by the CEP rule is described below.

(j) CEP Rule

[Event Condition] <danger event: danger> = hard braking && a distance between <danger event: position> and <positional event: position> is not more than 300 m

[Action] A <positional event: id> is notified of an alarm.

(k) Configuration Rule

[Event Condition] <danger event: danger> = hard braking && a distance between <danger event: position> and <positional event: position> is not more than 1300 m

[Action] The absolute value of a <danger event: position> is input into a sub-rule for execution, and a sub-rule for execution is set at a <positional event: id>.

(1) Sub-rule for Execution

[Event Condition] a distance between <danger event: position> and <positional event: position> is not more than 300 m

[Action] A <positional event: id> is notified of an alarm.

(m) Sub-rule for Notification

[Event Condition] 1000-m movement of a <positional event: position> after sending a positional event to a previous processing server

[Action] Deliver to a processing server.

(n) Sub-rule for Notification

[Event Condition] <danger event: danger> = hard braking [Action] Deliver to a processing server.

In the present exemplary embodiment, the (j) is an example of the CEP rule registered by the application. The event condition described in (j) is AND (logical product) of the two attribute condition "<danger event: danger> = hard braking" and "a distance between <danger event: position> and <positional event: position> is not more than 300 m".

"<danger event: danger> = hard braking" is a condition for judging whether the attribute value of the attribute "danger" of the danger event is "hard braking". "a distance between <danger event: position> and <positional event: position> is not more than 300 m" is a condition for judging whether the difference (distance) between the attribute value of the attribute "position" of the danger event and the attribute value of the attribute "position" of the positional event is not more than 300 m.

The (k) is an example of the configuration rule generated from the CEP rule described in the (j). The (1) is an example of the sub-rule for execution corresponding to the configuration rule described in the (k). The (m) or (n) is an example of the sub-rule for notification corresponding to the configuration rule described in the (k). The configuration of the sub-rule for execution is similar to the configuration of the CEP rule.

The rule distribution apparatus 100 sends the configuration rule and the sub-rule for execution to the processing server 200 (step S503). In this case, the processing server 200 registers the configuration rule and the sub-rule for execution in the own apparatus.

The rule distribution apparatus 100 registers the sub-rule (m) or (n) for notification in each terminal (step S504).

After step S504, each terminal in which the sub-rule for notification is registered starts a processing of notification of a positional event according to the sub-rule for notification described in the (m). In other words, each terminal notifies the processing server 200 of a positional event every 1000 m movement. Each terminal notifies the processing server 200 of a danger event according to the sub-rule for notification described in the (n) when detecting hard braking or the like.

The processing of step S504 may be pre-executed by a user or the like. For example, the user or the like may pre-generate the sub-rules (m) and (n) for notification and may register the sub-rules as sub-rules for initial operation in each terminal as in the first and second exemplary embodiments.

The processing of generating the configuration rule and the sub-rules in step S502 will now be explained.

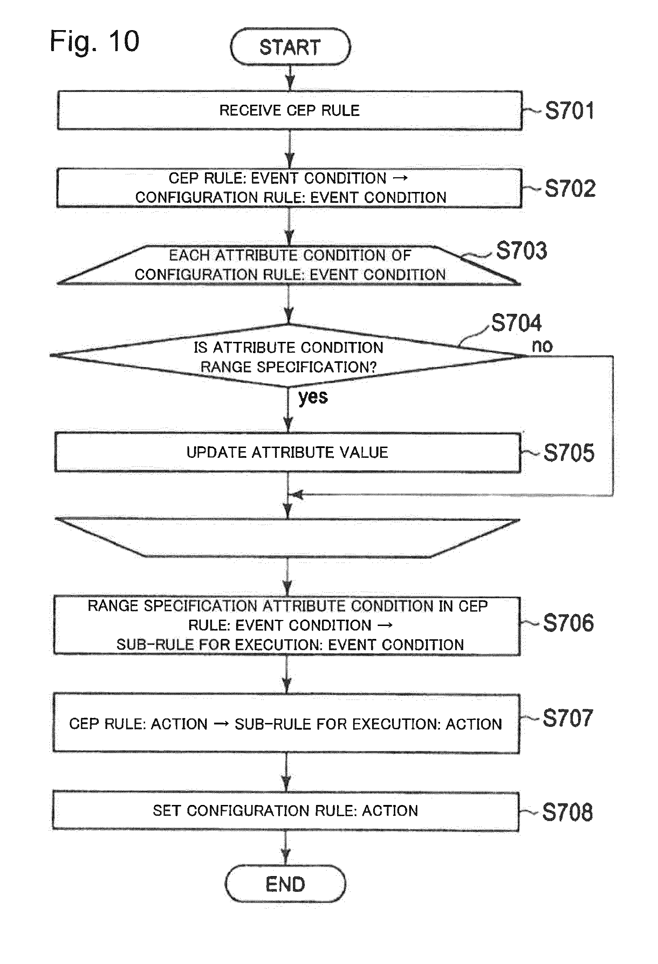

First, the rule distribution apparatus 100 generates the configuration rule and the sub-rules. Fig. 10 is a flowchart flowchart the processing of generating the configuration rule and the sub-rule for execution in step S502.

A rule receiving unit 110 in the rule distribution apparatus 100 sends a CEP rule to a configuration rule generation unit 130 and a sub-rule generation unit 140 when receiving the CEP rule from the application 400 (step S701).

The configuration rule generation unit 130 generates the configuration rule based on the CEP rule. In this case, the configuration rule generation unit 130 sets the event condition of the CEP rule at the event condition of the configuration rule (step S702).

The configuration rule generation unit 130 executes update processing (processing in steps S704 and S705) for each attribute condition of the event condition of the configuration rule (step S703).

In step S704, the configuration rule generation unit 130 judges whether or not the attribute condition is a range specification.

When the attribute condition is the range specification (yes of step S704), the configuration rule generation unit 130 updates the attribute value included in the attribute condition in step S705.

After step S705, the sub-rule generation unit 140 generates the sub-rule for execution based on the CEP rule (steps S706 and S707). In this case, the sub-rule generation unit 140 sets a range specification attribute condition in the event condition of the CEP rule at the event condition of the sub-rule for execution. In addition, the sub-rule generation unit 140 sets the action of the CEP rule at the action of the sub-rule for execution.

After step S707, the configuration rule generation unit 130 sets the action of the configuration rule (step S708). In this case, a processing content, indicating a vehicle, in which the sub-rule for execution generated by the sub-rule generation unit 140 is registered, when the event condition of the configuration rule is established, is set in the action of the configuration rule. In the case of the example described in the above (k), the vehicle targeted for registration, i.e., the candidate vehicle targeted for notification is a vehicle corresponding to the attribute value of the attribute "id" of the positional event matching the event condition of the configuration rule. The processing server 200 specifies a vehicle corresponding to the attribute value of the attribute "id" with reference to an event terminal association table. The event terminal association table is information in which the attribute values of the attributes "id" are associated with vehicles corresponding to the attribute values. The event terminal association table is stored in a storage unit (not illustrated) in the processing server 200, and the like.

The processing of updating the attribute condition of step S705 will now be explained.

The range specification attribute condition in the event condition of the configuration rule prior to execution of the update processing is "a distance between <danger event: position> and <positional event: position> is not more than 300 m". Thus, in step S705, the configuration rule generation unit 130 updates the attribute value "300 m" included in the attribute condition, as described below.

First, the configuration rule generation unit 130 determines the positional event sending interval x of a vehicle based on the CEP rule registered by the application and prior information stored in a prior information storage unit 150. In this case, it is assumed that the positional event sending interval x is determined to be 1000 m.

Then, the configuration rule generation unit 130 adds the positional event sending interval x (1000 m) to the attribute value "300 m". In other words, the attribute value is updated to "1300 (=300+1000) m". As a result, the event condition of the configuration rule becomes such a condition as described in the above (k).

A method for calculating a positional event sending interval x will now be explained. The positional event sending interval x is calculated so that the total communication volume u of the event processing system is minimized.

Eqn. 1 is an equation for calculating the total communication volume u of the event processing system.

$$u = (\alpha + \beta + \gamma) \cdot n \qquad (Eqn.1)$$

The symbol "$\alpha$" indicates the rate of occurrence, per second, of a danger event sent from a terminal to a processing server.

The symbol "$\beta$" indicates the rate of occurrence, per second, of a positional event sent from a terminal to a processing server. "$\beta$" is calculated by Eqn. 2.

$$\beta = \frac{p}{x} \qquad (Eqn.2)$$

The symbol "p" indicates the moving speed (m (meters) /s (second)) of a terminal.

The symbol "$\gamma$" indicates the rate of generation of a sub-rule for execution, i.e., the number of sub-rules for execution registered, per second, from a processing server into a terminal. "$\gamma$" is calculated by Eqn. 3.

$$\gamma = \alpha \cdot (x + e)^2 \cdot \pi \cdot m \cdot \frac{1}{n} \qquad (Eqn.3)$$

The symbol "e" indicates the radius of the range (circle) of notification of danger. In other words, "e" is a value indicating the radius (meter) of a danger detection vehicle, within which a vehicle is notified of an alert. The symbol "m" indicates a terminal density, i.e., the number of terminals that are candidates targeted for notification, per square meter. The symbol "n" indicates the total number of terminals.

The symbols, "$\alpha$", "p", "e", "n", and "m" are prior information and stored in the prior information storage unit 150.

The configuration rule generation unit 130 calculates a positional event sending interval x in which the total communication volume "u" represented by Eqn. 1 is minimized. For example, the x may be acquired among value of x of the convex part of a graph indicating the association between u and x, i.e., value of x in which the differential value of u is zero (0), and the limiting value of x (zero (0) or ∞). In addition, the method for calculating a positional event sending interval x may adopt another method.

The rule distribution apparatus 100 generates the configuration rule and the sub-rule for execution in step S502 and thereafter generates a sub-rule for notification according to the type of an event included in the event condition of the configuration rule. Specifically, the sub-rule generation unit 140 of the rule distribution apparatus 100 generates a sub-rule (m) for notification, which is for notification of a positional event, and a sub-rule (n) for notification, which is for notification of a danger event, in step S502.

The sub-rule generation unit 140 sets such an event condition that a positional event sending interval x is 1000 m, as described in the above (m), in the sub-rule for notification, which is for notification of a positional event.

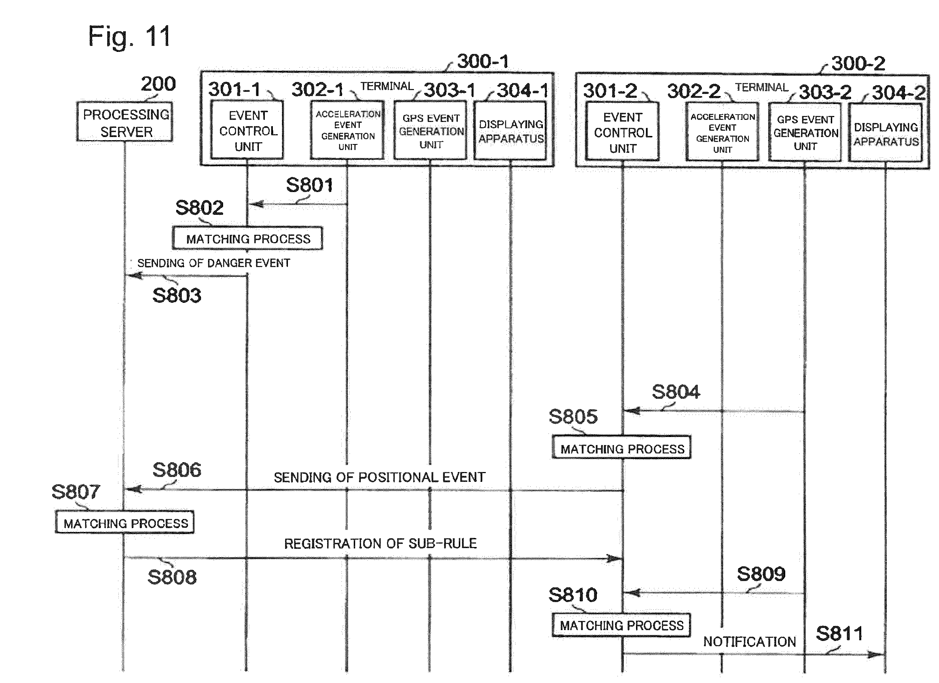

The operation of the event processing system applied to service for prior notification of a dangerous place in reception of a danger event is described below with reference to Fig. 11.

Fig. 11 is a sequence diagram illustrating the operation of the event processing system according to the third exemplary embodiment in reception of a danger event.

As illustrated in Fig. 11, an acceleration event generation unit 302-1 in the terminal 300-1 sends a danger event to the event control unit 301-1 when detecting hard braking or the like (step S801).

The event control unit 301-1 carries out a processing of matching the received danger event against the event condition of the sub-rule (n) for notification (step S802). When the danger event matches the event condition of the sub-rule (n) for notification, the event control unit 301-1 sends the danger event to the processing server 200 (step S803).

Whenever a positional event is sent from a GPS event generation unit 303-2, an event control unit 301-2 in the terminal 300-2 carries out a processing of matching the positional event against the event condition of the sub-rule (m) for notification (steps S804 and S805). When the positional event matches the event condition of the sub-rule (m) for notification, the event control unit 301-2 sends the positional event to the processing server 200 (step S806).

The processing server 200 carries out a processing of matching the danger event received in step S803 and the positional event received in step S806 against the event condition of the configuration rule (step S807).

When the dangerous event and the positional event match the event condition of the configuration rule in step S807, the processing server 200 executes the action of the configuration rule. In other words, the processing server 200 registers the sub-rule for execution in a terminal corresponding to the attribute value of the attribute "id" of the positional event (step S808). In other words, the processing server 200 registers the sub-rule for execution in the terminal 300-2 which is the source of sending of the positional event. In this case, the processing server 200 sets the absolute value of the attribute value of the attribute "position" of the received danger event at the attribute value of the attribute "position" of the danger event included in the event condition of the sub-rule for execution.

After step S808, whenever a positional event is sent from the GPS event generation unit 303-2, the event control unit 301-2 of the terminal 300-2 carries out a processing of matching the positional event against the event condition of the sub-rule for execution (steps S809 and S810).

When the positional event matches the event condition of the sub-rule for execution (for example, when the difference between the attribute value of the attribute "position" of the positional event and the attribute value of the attribute "position" of the danger event is not more than 300 m), the event control unit 301-2 executes the action of the sub-rule for execution (step S811). In other words, the event control unit 301-2 sends information for notification of danger to a displaying apparatus 304-2.

As described above, the processing server 200 judges whether the distance between a danger detection vehicle and each vehicle is not more than 1300 m based on the positional event, of which the notification is made every time each vehicle moves 1000 m, and the danger event, of which the notification is made by the danger detection vehicle. In addition, the processing server 200 registers the sub-rule for execution in the vehicle when it is judged that the distance between the vehicle and the danger detection vehicle is not more than 1300 m. As a result, the vehicle in which the sub-rule for execution is registered (candidate vehicle targeted for notification) displays information for notification of danger on the display or the like of the vehicle itself when the distance between the vehicle and the danger detection vehicle is not more than 300 m.

As explained above, in the present exemplary embodiment, the rule distribution apparatus determines a positional event sending interval at which the number of communications between the terminal and the processing server is minimized. In addition, the rule distribution apparatus controls the processing of the processing server and the terminal in the event processing system using the configuration rule, the sub-rule for execution, and the sub-rule for notification generated based on the determined positional event sending interval and the CEP rule registered by the application. In the present exemplary embodiment, the terminal executes the event processing of the CEP rule according to the sub-rule for execution, in place of the processing server. Thus, in accordance with the present exemplary embodiment, more dynamic, distributed parallel processing can be implemented in CEP.

In the present exemplary embodiment, the processing server 200 configures the sub-rule for execution only in the terminal of a user in the status (situation) of seeming to match the event condition of the CEP rule according to the configuration rule, as in the first and second exemplary embodiments. Thus, according to the present exemplary embodiment, the number of communications between the terminal and the processing server can be minimized when the CEP rule is executed in the service for prior notification of a dangerous place. Thus, the service for prior notification of a dangerous place can be provided without increasing the loads of the terminals, the processing server, and the network.

According to the present exemplary embodiment, it is not necessary to register the sub-rule for execution in all the terminals. Thus, a processing of configuring the sub-rule for execution in the terminals can be reduced. Since the memory consumption amount of the terminal can be reduced, the memory resource of the terminal can be prevented from becoming a bottleneck.

In the present exemplary embodiment, the processing server 200 may also delete the sub-rule for execution using a deletion rule as in the first and second exemplary embodiments. According to such embodiments, the memory consumption amount and CPU resource consumption amount of the terminal can be more reduced.

In the present exemplary embodiment, a case in which the terminal sends the danger event when detecting danger is taken as an example; however, the terminal may send an event other than the danger event. For example, the terminal may include a sensor that detects the change of a status other than danger and may send an event including information detected by the sensor.

(Exemplary Embodiment 4)

The fourth exemplary embodiment of the present invention will be explained below with reference to the drawings.

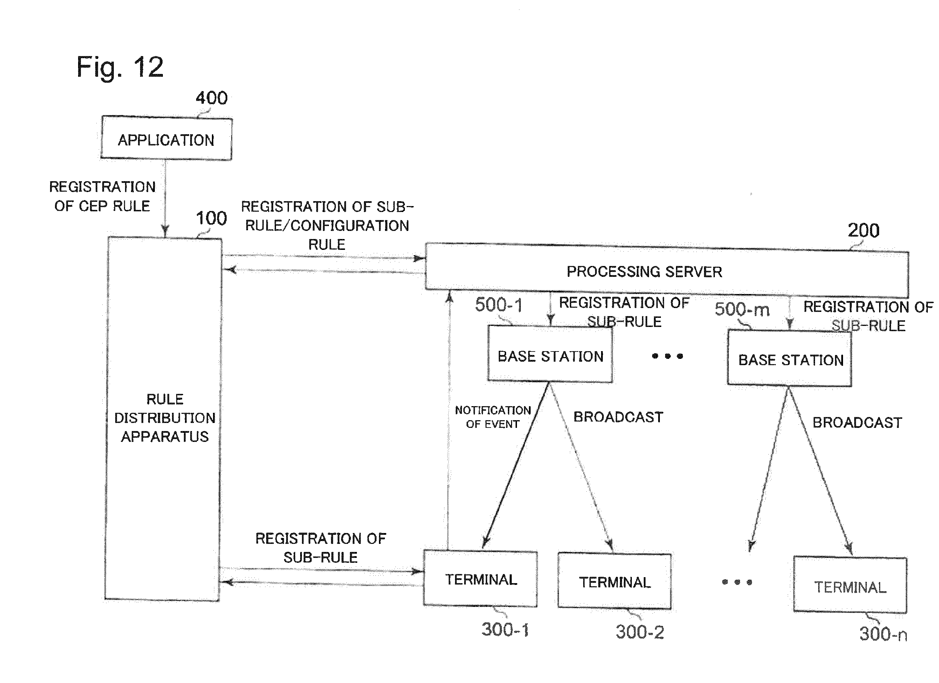

Fig. 12 is a block diagram illustrating the configuration of the fourth exemplary embodiment of an event processing system including a rule distribution apparatus according to the present invention. Since the configuration of the fourth exemplary embodiment of the event processing system is similar to the configuration of the first exemplary embodiment, an explanation thereof is omitted.

In the present exemplary embodiment, a processing server 200 and terminals 300-1 to 300-n are connected via base stations 500-1 to 500-m, as illustrated in Fig. 12. Any number of terminals may be connected to each base station. The two terminals 300-1 and 300-2 are connected to the base station 500-1 illustrated in Fig. 12.

The processing server 200 maintains the information of an area targeted by each base station (hereinafter referred to as area information). The processing server 200 specifies the base station targeting an area, which includes a position at which the danger event occurs, based on the area information when receiving a danger event. In addition, the processing server 200 executes the action of a configuration rule for the specified base station. The area information is pre-stored in a storage unit (not illustrated) included in the processing server 200.

The operation of the present exemplary embodiment will be explained below.

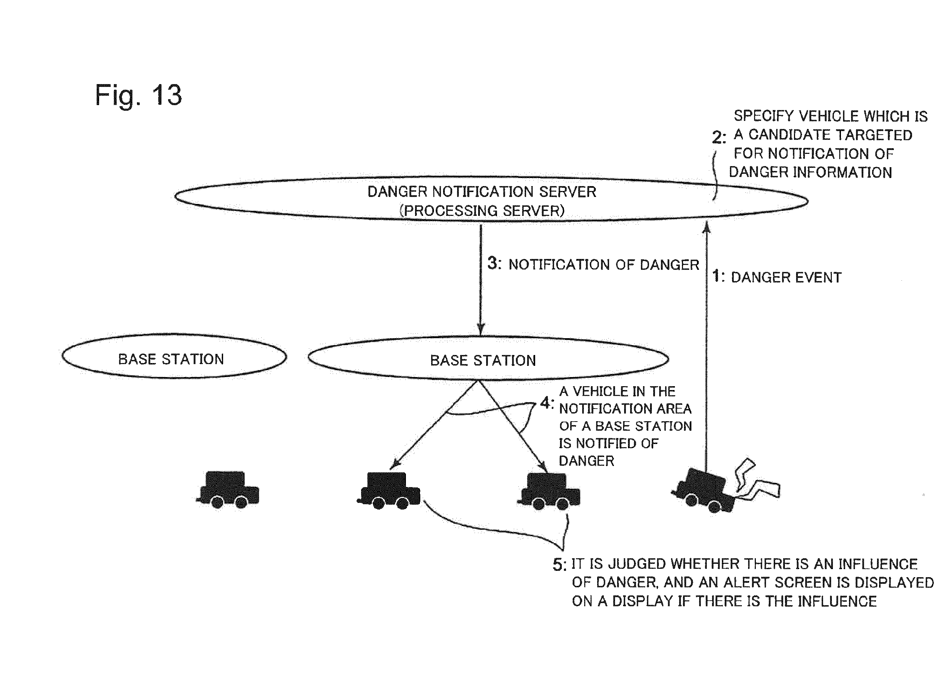

Fig. 13 is an explanatory drawing illustrating the scheme of service for prior notification of a danger place, providing a danger notification via a base station. In the third exemplary embodiment, a case, in which the event processing system is applied to the service for prior notification of a dangerous place, illustrated in Fig. 8, is taken as an example. In this case, a case, in which the event processing system is applied to the service for prior notification of a dangerous place, illustrated in Fig. 13, is taken as an example. A danger notification server illustrated in Fig. 13 notifies a terminal of danger via the base station.

Since the operation of the event processing system according to the fourth exemplary embodiment in registration of a CEP rule is similar to the operation of the third exemplary embodiment, illustrated in Fig. 9, an explanation thereof is omitted.

However, in the present exemplary embodiment, a rule distribution apparatus 100 prevents a range specification attribute condition from being included in the event condition of a configuration rule when the event condition of the CEP rule is set at the event condition of the configuration rule in step S502.

The rule distribution apparatus 100 generates only a sub-rule for notifying a terminal of a danger event as a sub-rule for notification but does not generate a sub-rule for notification of a positional event.

The rule distribution apparatus 100 registers a processing of requesting the base station targeting an area which includes a position at which a danger event occurs to broadcast a sub-rule for execution, as the action of the configuration rule.

Thus, in the present exemplary embodiment, when the CEP rule described in the above (j) is registered in the rule distribution apparatus 100 from an application 400, the rule distribution apparatus 100 generates rules described in the following (o) to (q).

(o) Configuration Rule

[Event Condition] <danger event: danger> = hard braking [Action] The absolute value of a <danger event: position> is input into a sub-rule for execution, and a base station that covers the <danger event: position> is requested to broadcast a sub-rule for execution twice every 5 seconds.

(p) Sub-rule for Execution

[Event Condition] A distance between <danger event: position> and a <positional event: position> is not more than 300 m

[Action] A <positional event: id> is notified of an alarm.

(q) Sub-rule for Notification

[Event Condition] <danger event: danger> = hard braking

[Action] Deliver to a processing server.

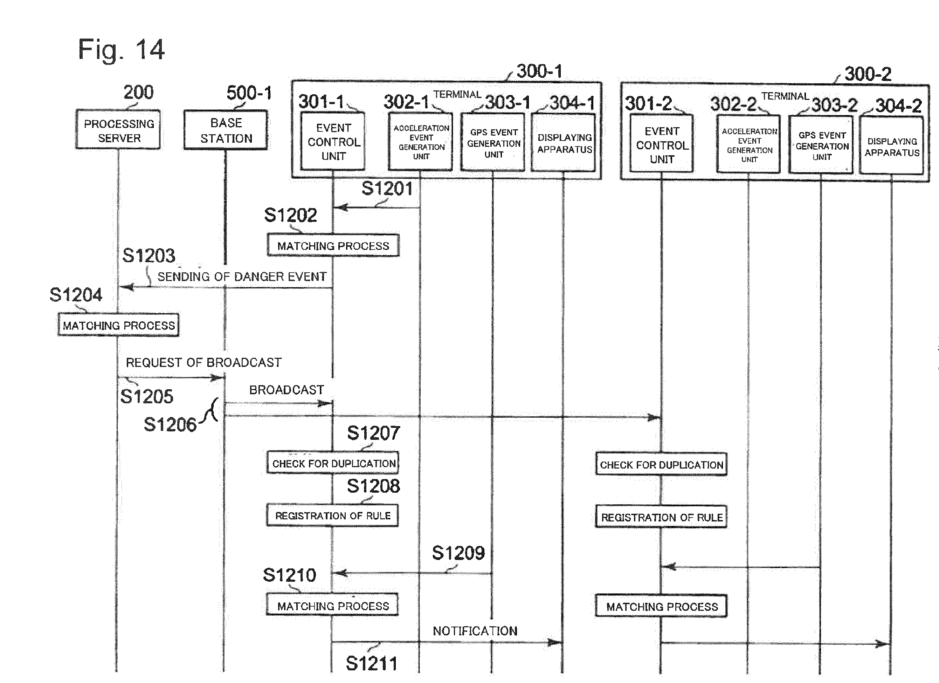

Fig. 14 is a sequence diagram illustrating the operation of the event processing system according to the fourth exemplary embodiment in reception of a danger event.

Since the processing of steps S1201 to S1203 are similar to the processing of steps S801 to S803 of the third exemplary embodiment, an explanation thereof is omitted.

The processing server 200 carries out a processing of matching the danger event received in step S1203 against the event condition of the configuration rule (step S1204).

When the danger event matches the event condition of the configuration rule in step S1204, the processing server 200 carries out the action of the configuration rule (step S1205).

In step S1205, the processing server 200 specifies the base station targeting the area, which includes a position at which the received danger event occurs, based on the area information. In this case, it is assumed that the base station 500-1 is specified. The processing server 200 sends a sub-rule for execution to the base station 500-1 and requests broadcasting of the sub-rule for execution. In the present exemplary embodiment, the processing server 200 requests the sub-rule for execution to be broadcasted twice every 5 seconds according to the configuration rule described in the above (o).

The base station 500 broadcasts the sub-rule for execution received from the processing server 200 to terminals 300-1 and 300-2 under the control of the station itself (step S1206).

The event control unit of each terminal carried out a check for duplication as to whether the sub-rule for execution has been already registered in the terminal itself (step S1207). As a result of the check for duplication, when the sub-rule for execution is unregistered, each terminal registers the sub-rule for execution (step S1208).

After step S1208, whenever a positional event is sent from a GPS event generation unit, the event control unit of each terminal carries out a processing of matching the positional event against the sub-rule for execution (steps S1209 and S1210).

When the positional event matches the sub-rule for execution, the event control unit of the each terminal executes the action of the sub-rule for execution (step S1211). In other words, the event control unit sends information for notification of danger, for example, image information for displaying an alert screen to the displaying apparatus of the terminal itself.

The operation of the event processing system in a case in which the sub-rule for execution is registered in the terminals 300-1 and 300-2 and thereafter a terminal newly joins under the control of the base station 500 will now be explained.

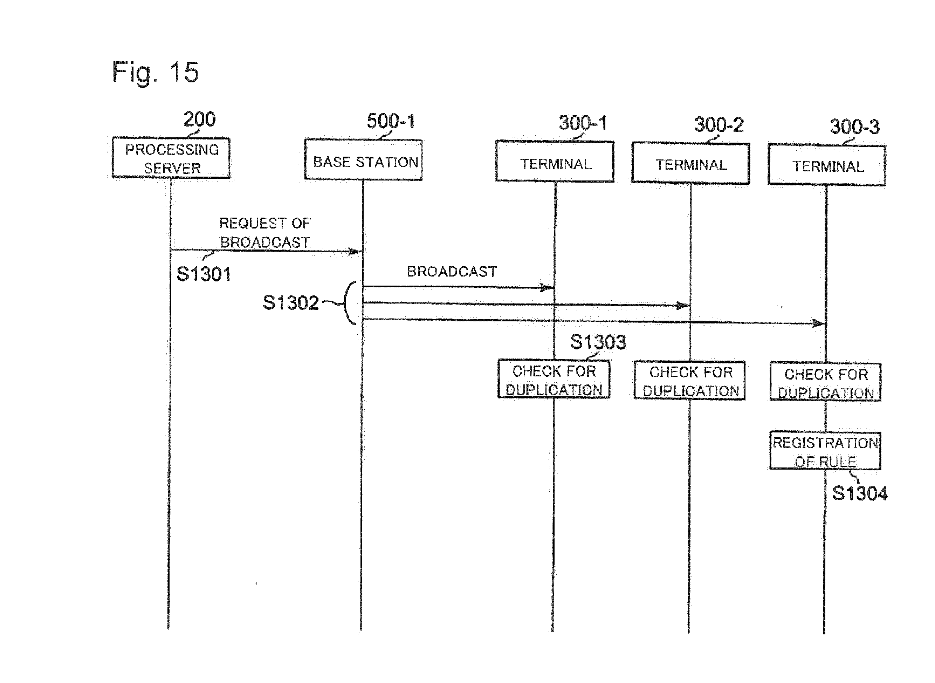

Fig. 15 is a sequence diagram illustrating the operation of the event processing system according to the fourth exemplary embodiment in new joining of a terminal. Fig. 15 illustrates the operation of the event processing system in a case in which a terminal 300-3 newly joins under the control of the base station 500-1.

When the terminal 300-3 newly joins and the sub-rule for execution is thereafter requested to be broadcasted (step S1301), the base station 500 broadcasts the sub-rule for execution to the terminals 300-1, 300-2, and 300-3 (step S1302).

Each terminal carries out a check for duplication as to whether the sub-rule for execution has been already registered in the terminal in itself (step S1303).

Because the sub-rule for execution has been already registered in the terminals 300-1 and 300-2, a processing of registering the sub-rule for execution is not carried out.

Since the sub-rule for execution is unregistered in the terminal 300-3 which newly joins, the sub-rule for execution is registered in the terminal 300-3 (step S1304).

After step S1304, the terminal 300-3 executes the processing of steps S1209 to S1211 described in Fig. 14.

As explained above, in the present exemplary embodiment, the base station to which the terminal that sends a danger event is connected under the control is requested to broadcast the sub-rule for execution when the processing server receives the danger event. Thus, it is only essential that the processing server refers to the area information of each base station when a terminal targeted for notification of danger is specified. Thus, it is not necessary for the processing server 200 to receive the positional event from each terminal, and therefore, the loads of the terminals, the processing server, and the network can be further reduced.

Since it is not necessary to register a sub-rule for notification, which is for notification of a positional event, in the terminals, the processing of configuring the sub-rule for notification in the terminals can be further reduced. Since the memory consumption amounts of the terminals can be reduced, it is easier to prevent the memory resources of the terminals from becoming bottlenecks.

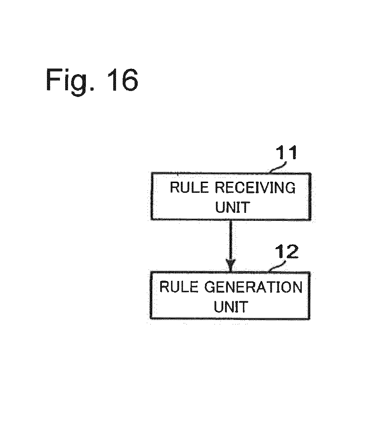

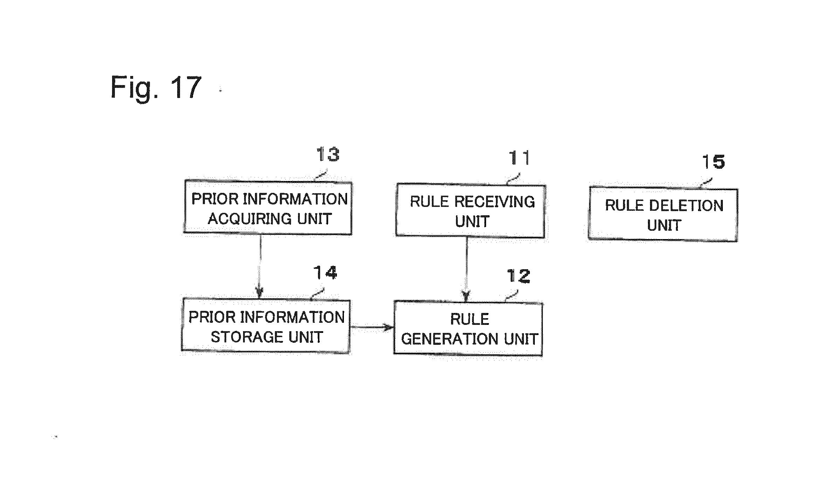

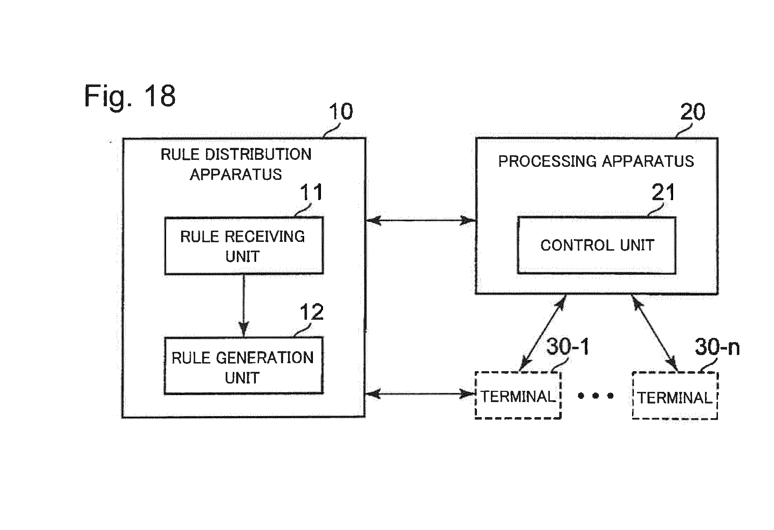

Fig. 16 is a block diagram illustrating the minimum configuration of the rule distribution apparatus according to the present invention. Fig. 17 is a block diagram illustrating the other minimum configuration of the rule distribution apparatus according to the present invention. Fig. 18 is a block diagram illustrating the minimum configuration of the event processing system according to the present invention.

As illustrated in Fig. 16, a rule distribution apparatus 10 includes a rule receiving unit 11 and a rule generation unit 12. Such a rule receiving unit 11 receives a processing rule that defines an action requested by the application and an event condition under which the action is executed. Such a rule generation unit 12 generates a sub-rule for judging some or all of one or more attribute conditions included in the event condition of the processing rule, or for changing the timing of sending an event. In addition, such a rule generation unit 12 generates a configuration rule including an event condition specifying the timing of registering a sub-rule in terminals that send an event. In addition, such a rule generation unit 12 sends a configuration rule and a sub-rule to a processing apparatus that can communicate with a terminal and can execute an event process. Such a rule distribution apparatus 10 corresponds to the rule distribution apparatus 100 illustrated in Fig. 2. Such an application corresponds to the application 400 illustrated in Fig. 1. Such a rule receiving unit 11 corresponds to the rule receiving unit 110 in the rule distribution apparatus 100 illustrated in Fig. 2. Such terminals that send an event correspond to the terminals 300-1 to 300-n illustrated in Fig. 1. Such a processing apparatus corresponds to the processing server 200 illustrated in Fig. 1. Such a rule generation unit 12 corresponds to the configuration rule generation unit 130 and the sub-rule generation unit 140 in the rule distribution apparatus 100 illustrated in Fig. 2.

According to such a configuration, a CEP rule can be executed without increasing the loads of terminals, a processing server, and a network. In addition, dynamic, distributed parallel processing can be implemented in CEP. In addition, since it is not necessary to register a sub-rule in all the terminals, a processing of configuring the sub-rule in a terminal can be reduced. In addition, the memory consumption amount of the terminals can be reduced. Thus, a resource in the network can be prevented from becoming a bottleneck, and the high quality of service can be maintained.

In the exemplary embodiments described above, the following rule distribution apparatus is also disclosed.

(1) The rule distribution apparatus, wherein the event condition includes a range specification attribute condition for judging whether or not the attribute value of an event received from a terminal is included in a predetermined range; and the rule generation unit 12 calculates a new specified range including the specified range based on the specified range of the range specification attribute condition of a processing rule, to set the new specified range as the specified range of the range specification attribute condition of a configuration rule.

According to such a configuration, a CEP rule including the event condition including the range specification attribute condition can be executed without increasing the loads of terminals, a processing server, and a network.

(2) The rule distribution apparatus, wherein when the rule receiving unit 11 receives a processing rule, the rule generation unit 12 generates a second sub-rule for initially operating a terminal based on the processing rule and sends the second sub-rule to the terminal.

According to such a configuration, it is not necessary to register the second sub-rule in the terminal until the rule receiving unit receives the processing rule, i.e., until the processing rule is registered by the application. Thus, the memory consumption amount of the terminal can be more reduced. In addition, since the sending of an event from the terminal by the second sub-rule can be suppressed, the loads of the terminal, the processing server, and the network can be reduced. In addition, for example, the terminal can be allowed to execute the sending of an event necessary for the event condition of the configuration rule, as initial operation.

(3) The rule distribution apparatus, wherein the rule receiving unit 11 receives a processing rule in which a range specification attribute condition for judging whether or not a fixed area and a terminal exist in a specified range is included in an event condition; and the rule generation unit 12 generates a sub-rule in which the range specification attribute condition is an event condition and a processing of sending a positional event to the processing apparatus is an action.

According to such a configuration, the sending of an unnecessary event can be suppressed in a terminal that does not seem to match the event condition of a CEP rule, and therefore, the number of communications between the terminal and the processing server can be minimized. Thus, the CEP rule can be executed without increasing the loads of the terminal, the processing server, and the network.

(4) The rule distribution apparatus, wherein the rule receiving unit 11 receives a processing rule in which a range specification attribute condition for judging whether or not each terminal is in a specified range is included in an event condition; and the rule generation unit 12 generates a sub-rule in which sending of a positional event is an action and a cycle at which the positional event is sent to the event condition is specified.

According to such a configuration, a CEP rule can be executed even in a status in which the position of one to be monitored is not fixed. In other words, according to such a configuration as described above, the CEP rule can be executed without increasing the loads of the terminal, the processing server, and the network even in service in which the positions of both to be monitored are not fixed.

(5) The rule distribution apparatus, wherein the rule receiving unit 11 receives a processing rule in which a range specification attribute condition for judging whether or not a terminal which is a source of sending of a positional event and a terminal which is a source of sending of an event other than a positional event are in a specified range is included in an event condition; and the rule generation unit 12 generates a sub-rule in which the range specification attribute condition is an event condition and sets the action of the processing rule as the action of the sub-rule.

According to such a configuration, a CEP rule can be executed without increasing the loads of the terminals, the processing server, and the network even when an event other than the positional event is included in the event condition of the CEP rule. For example, the number of communications between the terminals and the processing server can be minimized when the CEP rule is executed in service for prior notification of a dangerous place. Thus, the service for prior notification of a dangerous place can be provided without increasing the loads of the terminals, the processing server, and the network.

(6) The rule distribution apparatus, wherein when the processing apparatus and the terminal are connected via a base station (corresponding to the base stations 500-1 to 500-m illustrated in Fig. 12), the rule generation unit 12 sends a configuration rule, in which an action of requesting the base station to broadcast a sub-rule to the terminal connected to the base station is defined, to the processing apparatus.

According to such a configuration, a terminal targeted for notification of a sub-rule for execution is specified only with reference to the area information of each base station. Thus, it is not necessary for the processing server to receive a positional event from each terminal, and therefore, the loads of the terminal, the processing server, and the network can be further reduced. In addition, since it is not necessary to register a sub-rule for notification, which is for notification of a positional event, in the terminal, a processing of configuring the sub-rule for notification in the terminal can be further reduced. In addition, since the memory consumption amount of the terminal can be reduced, it is easier to prevent the memory resource of the terminal from becoming a bottleneck.

(7) The rule distribution apparatus, wherein the rule generation unit 12 generates a deletion rule for deleting a sub-rule from the terminal in which the sub-rule is registered, sets an event condition, in which timing at which the sub-rule is deleted is specified, in the deletion rule, and sends the deletion rule to the processing apparatus.

According to such a configuration, the sub-rule can be deleted from the terminal when a matching process by the sub-rule in the terminal is not necessary. As a result, the memory consumption amount and CPU resource consumption amount of the terminal can be more reduced.

(8) As illustrated in Fig. 17, the rule distribution apparatus including: a prior information acquiring unit 13 (corresponding to the prior information acquiring unit 120 in the rule distribution apparatus 100 illustrated in Fig. 2) that receives information indicating a processing capacity from the processing apparatus and the terminal; and a prior information storage unit 14 (corresponding to the prior information storage unit 150 in the rule distribution apparatus 100 illustrated in Fig. 2) that stores the information indicating the processing capacity, acquired by the prior information acquiring unit 13, wherein the rule generation unit 12 determines a terminal, to which a second sub-rule is sent, based on the information stored in the prior information storage unit 14.

According to such a configuration, the terminal to which an event necessary for the event condition of the configuration rule is sent can be determined depending on the processing capacity of the processing apparatus and the terminal.

(9) As illustrated in Fig. 17, the rule distribution apparatus including a rule deletion unit 15 (corresponding to the rule deletion unit (not illustrated) in the rule distribution apparatus 100 illustrated in Fig. 2) that, when receiving a request to delete a processing rule, sends a request to delete a configuration rule, generated from the processing rule, to the processing apparatus, in which the configuration rule is registered, and sends a request to delete a sub-rule, generated from the processing rule, to a terminal in which the sub-rule is registered.

According to such a configuration, the memory consumption amount and CPU resource consumption amount of the rule distribution apparatus, the processing server, and the terminal can be more reduced.

The rule distribution apparatus illustrated in Fig. 17 includes the prior information acquiring unit 13, the prior information storage unit 14, and the rule deletion unit 15, and may also include either of both prior information acquiring unit 13 and prior information storage unit 14 and the rule deletion unit 15.

In the exemplary embodiments described above, the event processing system illustrated in Fig. 18 is also disclosed.

(10) An event processing system including: a rule distribution apparatus 10; and a processing apparatus 20 (corresponding to the processing server 200 illustrated in Fig. 1) that can communicate with terminals 30-1 to 30-n (corresponding to the terminals 300-1 to 300-n illustrated in Fig. 1) and can execute an event process, wherein the rule distribution apparatus 10 includes: a rule receiving unit 11 that receives a processing rule that defines an action requested by an application and an event condition for executing the action; and a rule generation unit 12 that generates a sub-rule for judging a part or all of not less than one attribute condition included in an event condition in the processing rule or for changing timing at which an event is sent, generates a configuration rule including an event condition that specifies timing at which the sub-rule is registered in the terminals 30-1 to 30-n to which an event is sent, and sends the configuration rule and the sub-rule to the processing apparatus 20; and the processing apparatus 20 includes a control unit 21 (corresponding to the control unit (not illustrated) in the processing server 200 illustrated in Fig. 1) that executes a processing for matching an event of which a notification is provided by the terminal according to an event condition in the configuration rule and sends the sub-rule to the terminals when the event matches the event condition.

According to such a configuration, a CEP rule can be executed without increasing the loads of terminals, a processing server, and a network. In addition, dynamic, distributed parallel processing can be implemented in CEP. In addition, since it is not necessary to register a sub-rule in all the terminals, a processing of configuring the sub-rule in a terminal can be reduced. In addition, the memory consumption amount of the terminals can be reduced. Thus, a resource in the network can be prevented from becoming a bottleneck, and the high quality of service can be maintained.

Some or all of the exemplary embodiments described above can also be described as in the following supplemental notes, without limitation to the following supplemental notes.

(Supplemental Note 1) An event processing system including: a rule distribution apparatus 10; and a processing apparatus 20 that can communicate with terminals 30-1 to 30-n and can execute an event process, wherein the rule distribution apparatus 10 includes: a rule receiving unit 11 that receives a processing rule that defines an action requested by an application and an event condition for executing the action; and a rule generation unit 12 that generates a sub-rule for judging a part or all of not less than one attribute condition included in an event condition in the processing rule or for changing timing at which an event is sent, generates a configuration rule including an event condition that specifies timing at which the sub-rule is registered in the terminals 30-1 to 30-n to which an event is sent, and sends the configuration rule and the sub-rule to the processing apparatus 20; and the processing apparatus 20 includes a control unit 21 that executes a processing for matching an event of which a notification is provided by the terminal according to an event condition in the configuration rule and sends the sub-rule to the terminals when the event matches the event condition.

(Supplemental Note 2) The event processing system according to Supplemental Note 1, wherein the event condition includes a range specification attribute condition for judging whether or not the attribute value of an event received from terminals 30-1 to 30-n is included in a predetermined range; and the rule generation unit 12 calculates a new specified range including the specified range based on the specified range of the range specification attribute condition of a processing rule, to set the new specified range as the specified range of the range specification attribute condition of a configuration rule.

According to such a configuration, a CEP rule including the event condition including the range specification attribute condition can be executed without increasing the loads of terminals, a processing server, and a network.

(Supplemental Note 3) The event processing system according to Supplemental Note 1 or Supplemental Note 2, wherein when the rule receiving unit 11 receives a processing rule, the rule generation unit 12 generates a second sub-rule for initially operating a terminal based on the processing rule and sends the second sub-rule to the terminal.

According to such a configuration, it is not necessary to register the second sub-rule in the terminal until the rule receiving unit receives the processing rule, i.e., until the processing rule is registered by the application. Thus, the memory consumption amount of the terminal can be more reduced. In addition, since the sending of an event from the terminal by the second sub-rule can be suppressed, the loads of the terminal, the processing server, and the network can be reduced. In addition, for example, the terminal can be allowed to execute the sending of an event necessary for the event condition of the configuration rule, as initial operation.

(Supplemental Note 4) The event processing system according to any one of Supplemental Note 1 to Supplemental Note 3, wherein the rule receiving unit 11 receives a processing rule in which a range specification attribute condition for judging whether or not a fixed area and a terminal exist in a specified range is included in an event condition; and the rule generation unit 12 generates a sub-rule in which the range specification attribute condition is an event condition and a processing of sending a positional event to the processing apparatus 20 is an action.

According to such a configuration, the sending of an unnecessary event can be suppressed in a terminal that does not seem to match the event condition of a CEP rule, and therefore, the number of communications between the terminal and the processing server can be minimized. Thus, the CEP rule can be executed without increasing the loads of the terminal, the processing server, and the network.

(Supplemental Note 5) The event processing system according to any one of Supplemental Note 1 to Supplemental Note 3, wherein the rule receiving unit 11 receives a processing rule in which a range specification attribute condition for judging whether or not each terminal is in a specified range is included in an event condition; and the rule generation unit 12 generates a sub-rule in which sending of a positional event is an action and a cycle at which the positional event is sent to the event condition is specified.

According to such a configuration, a CEP rule can be executed without increasing the loads of the terminal, the processing server, and the network even in a status in which the position of one to be monitored is not fixed, i.e., even in service in which the positions of both to be monitored are not fixed.

(Supplemental Note 6) The event processing system according to any one of Supplemental Note 1 to Supplemental Note 3, wherein the rule receiving unit 11 receives a processing rule in which a range specification attribute condition for judging whether or not a terminal which is a source of sending of a positional event and a terminal which is a source of sending of an event other than a positional event are in a specified range is included in an event condition; and the rule generation unit 12 generates a sub-rule in which the range specification attribute condition is an event condition and sets the action of the processing rule as the action of the sub-rule.

According to such a configuration, a CEP rule can be executed without increasing the loads of the terminals, the processing server, and the network even when an event other than the positional event is included in the event condition of the CEP rule. For example, the number of communications between the terminals and the processing server can be minimized when the CEP rule is executed in service for prior notification of a dangerous place. Thus, the service for prior notification of a dangerous place can be provided without increasing the loads of the terminals, the processing server, and the network.

(Supplemental Note 7) The event processing system according to Supplemental Note 6, wherein when the processing apparatus 20 and the terminals 30-1 to 30-n are connected via a base station, the rule generation unit 12 sends a configuration rule, in which an action of requesting the base station to broadcast a sub-rule to the terminal connected to the base station is defined, to the processing apparatus 20.

According to such a configuration, it is essential only to refer to the area information of each base station when a terminal targeted for notification of a sub-rule for execution is specified. Thus, it is not necessary for the processing server to receive a positional event from each terminal, and therefore, the loads of the terminal, the processing server, and the network can be further reduced. In addition, since it is not necessary to register a sub-rule for notification, which is for notification of a positional event, in the terminal, a processing of configuring the sub-rule for notification in the terminal can be further reduced. In addition, since the memory consumption amount of the terminal can be reduced, it is easier to prevent the memory resource of the terminal from becoming a bottleneck.

(Supplemental Note 8) The event processing system according to any one of Supplemental Note 1 to Supplemental Note 7, wherein the rule generation unit 12 generates a deletion rule for deleting a sub-rule from the terminals 30-1 to 30-n in which the sub-rule is registered, sets an event condition, in which timing at which the sub-rule is deleted is specified, in the deletion rule, and sends the deletion rule to the processing apparatus 20.

According to such a configuration, the sub-rule can be deleted from the terminal when a matching process by the sub-rule in the terminal is not necessary. As a result, the memory consumption amount and CPU resource consumption amount of the terminal can be more reduced.

(Supplemental Note 9) The event processing system according to any one of Supplemental Note 3 to Supplemental Note 8, wherein the rule distribution apparatus 10 includes: a prior information acquiring unit 13 that receives information indicating a processing capacity from the processing apparatus 20 and the terminals 30-1 to 30-n; and a prior information storage unit 14 that stores the information indicating the processing capacity, acquired by the prior information acquiring unit 13; and the rule generation unit 12 determines a terminal, to which a second sub-rule is sent, based on the information stored in the prior information storage unit 14.

According to such a configuration, the terminal to which an event necessary for the event condition of the configuration rule is sent can be determined depending on the processing capacity of the processing apparatus and the terminal.

(Supplemental Note 10) The event processing system according to any one of Supplemental Note 1 to Supplemental Note 9, wherein the rule distribution apparatus 10 includes a rule deletion unit 15 that, when receiving a request to delete a processing rule, sends a request to delete a configuration rule, generated from the processing rule, to the processing apparatus 20, in which the configuration rule is registered, and sends a request to delete a sub-rule, generated from the processing rule, to a terminal in which the sub-rule is registered.

According to such a configuration, the memory consumption amounts and CPU resource consumption amounts of the rule distribution apparatus, the processing server, and the terminal can be more reduced.

This application claims the priority based on Japanese Patent Application No. 2012-191260, which was filed on August 31, 2012 and the disclosure of which is incorporated herein in its entirety.

The present invention has been explained above with reference to the exemplary embodiments; however, the present invention is not limited to the exemplary embodiments described above. Various modifications that can be understood by those skilled in the art can be made within the scope of the present invention.

[Reference signs List]

| | |
|---|---|
| 10, 100 | Rule distribution apparatus |
| 11, 110 | Rule receiving unit |
| 12 | Rule generation unit |
| 13, 120 | Prior information acquiring unit |
| 14, 150 | Prior information storage unit |
| 15 | Rule deletion unit |
| 20 | Processing apparatus |
| 21 | Control unit |
| 30-1 to 30-n, 300, 300-1 to 300-n | Terminal |
| 130 | Configuration rule generation unit |
| 140 | Sub-rule generation unit |
| 160 | Event terminal association table |
| 200 | Processing server |
| 400 | Application |
| 500-1 to 500-m | Base station |

**Claims**

1. A rule distribution apparatus comprising:

   a rule receiving unit that receives a processing rule that defines an action requested by an application and an event condition for executing the action; and
   a rule generation unit that generates a sub-rule for judging a part or all of not less than one attribute condition included in an event condition in the processing rule or for changing timing at which an event is sent, generates a configuration rule including an event condition that specifies timing at which the sub-rule is registered in a terminal to which an event is sent, and sends the configuration rule and the sub-rule to a processing apparatus that can communicate with the terminal and can execute an event process.

2. The rule distribution apparatus according to claim 1, wherein
   the event condition includes a range specification attribute condition for judging whether or not the attribute value of an event received from a terminal is included in a predetermined range; and
   the rule generation unit calculates, based on a specified range of the range specification attribute condition of the processing rule, a new specified range including the specified range , and sets the new specified range as the specified range of the range specification attribute condition of the configuration rule.

3. The rule distribution apparatus according to claim 1 or claim 2, wherein
   when the rule receiving unit receives the processing rule, the rule generation unit generates a second sub-rule for initial operation of a terminal based on the processing rule and sends the second sub-rule to the terminal.

4. The rule distribution apparatus according to any one of claim 1 to claim 3, wherein
   the rule receiving unit receives the processing rule in which a range specification attribute condition for judging whether or not a fixed area and a terminal exist in a specified range is included in an event condition; and
   the rule generation unit generates the sub-rule in which the range specification attribute condition is an event condition and a processing of sending a positional event to the processing apparatus is an action.

5. The rule distribution apparatus according to any one of claim 1 to claim 3, wherein
   the rule receiving unit receives the processing rule in which a range specification attribute condition for judging whether or not each terminal is in a specified range is included in an event condition; and
   the rule generation unit generates the sub-rule in which sending of a positional event is an action and a cycle at which the positional event is sent to the event condition is specified.

6. The rule distribution apparatus according to any one of claim 1 to claim 3, wherein
   the rule receiving unit receives the processing rule in which a range specification attribute condition for judging whether or not a terminal which is a source of sending of a positional event and a terminal which is a source of sending of an event other than a positional event are in a specified range is included in an event condition; and
   the rule generation unit generates the sub-rule in which the range specification attribute condition is an event condition and sets the action of the processing rule as the action of the sub-rule.

7. The rule distribution apparatus according to claim 6, wherein
   when the processing apparatus and the terminal are connected via a base station, the rule generation unit sends the configuration rule, in which an action of requesting the base station to broadcast the sub-rule to the terminal connected to the base station is defined, to the processing apparatus.

8. The rule distribution apparatus according to any one of claim 1 to claim 7, wherein
   the rule generation unit generates a deletion rule for deleting the sub-rule from the terminal in which the sub-rule is registered, sets an event condition, in which timing at which the sub-rule is deleted is specified, in the deletion rule, and sends the deletion rule to the processing apparatus.

9. The rule distribution apparatus according to any one of claim 3 to claim 8, further comprising: a prior information acquiring unit that receives information indicating a processing capacity from the processing apparatus and the terminal; and a prior information storage unit that stores the information indicating the processing capacity, acquired by the prior information acquiring unit,
   wherein the rule generation unit determines the terminal, to which the second sub-rule is sent, based on the information stored in the prior information storage unit.

**10.** The rule distribution apparatus according to any one of claim 1 to claim 9, further comprising a rule deletion unit that, when receiving a request to delete the processing rule, sends a request to delete the configuration rule, generated from the processing rule, to the processing apparatus, in which the configuration rule is registered, and sends a request to delete the sub-rule, generated from the processing rule, to the terminal in which the sub-rule is registered.

**11.** An event processing system comprising: a rule distribution apparatus; and a processing apparatus that can communicate with a terminal and can execute an event process, wherein
the rule distribution apparatus comprises:

a rule receiving unit that receives a processing rule that defines an action requested by an application and an event condition for executing the action; and
a rule generation unit that generates a sub-rule for judging a part or all of not less than one attribute condition included in an event condition in the processing rule or for changing timing at which an event is sent, generates a configuration rule including an event condition that specifies timing at which the sub-rule is registered in the terminal to which an event is sent, and sends the configuration rule and the sub-rule to the processing apparatus; and
the processing apparatus comprises a control unit that executes a processing for matching an event of which a notification is provided by the terminal according to an event condition in the configuration rule and sends the sub-rule to the terminal when the event matches the event condition.

**12.** A rule distribution method comprising:

receiving a processing rule that defines an action requested by an application and an event condition for executing the action; and
generating a sub-rule for judging a part or all of not less than one attribute condition included in an event condition in the processing rule or for changing timing at which an event is sent, generating a configuration rule including an event condition that specifies timing at which the sub-rule is registered in a terminal to which an event is sent, and sending the configuration rule and the sub-rule to a processing apparatus that can communicate with the terminal and can execute an event process.

**13.** A rule distribution program for allowing a computer to execute:

a processing of receiving a processing rule that defines an action requested by an application and an event condition for executing the action; and
a processing of generating a sub-rule for judging a part or all of not less than one attribute condition included in an event condition in the processing rule or for changing timing at which an event is sent, generating a configuration rule including an event condition that specifies timing at which the sub-rule is registered in a terminal to which an event is sent, and sending the configuration rule and the sub-rule to a processing apparatus that can communicate with the terminal and can execute an event process.

Fig. 1

# Fig. 2

Fig. 3

300

TERMINAL

303

**GPS EVENT GENERATION UNIT**

302

**ACCELERATION EVENT GENERATION UNIT**

**EVENT CONTROL UNIT** ~301

**DISPLAYING APPARATUS** ~304

# Fig. 4

ADVERTISEMENT COMPANY

1: REGISTRATION OF CEP RULE

2: GENERATION OF SUB-RULE

CLOUD
(RULE DISTRIBUTION APPARATUS &
PROCESSING SERVER)

3: REGISTRATION OF SUB-RULE

4: DELETION OF SUB-RULE

3: REGISTRATION OF SUB-RULE

STORE A

STORE B

USER X

NEIGHBORHOOD OF STORE A

USER Y

NEIGHBORHOOD OF STORE B

EP 2 891 985 A1

# Fig. 5

EP 2 891 985 A1

# Fig. 6

PROCESSING SERVER

1: POSITIONAL EVENT (INTERVAL OF 5 MINUTES)

1: POSITIONAL EVENT (INTERVAL OF 5 MINUTES)

USER X

USER Y

2000m

2: IN THE PROCESSING SERVER, IT IS JUDGED THAT THE DISTANCE BETWEEN THE TWO USERS IS NOT MORE THAN A PREDETERMINED DISTANCE (E.G., NOT MORE THAN 1300 m)

4: IT IS JUDGED THAT THE DISTANCE BETWEEN THE TWO USERS IS NOT MORE THAN 300 m

PROCESSING SERVER

3: POSITIONAL EVENT (INTERVAL OF 30 SECONDS)

5: NOTIFICATION OF APPROACH

3: POSITIONAL EVENT (INTERVAL OF 30 SECONDS)

5: NOTIFICATION OF APPROACH

USER X

USER Y

200m

EP 2 891 985 A1

EP 2 891 985 A1

Fig. 7

# Fig. 8

**3:** SPECIFY VEHICLE WHICH IS A CANDIDATE TARGETED FOR NOTIFICATION OF DANGER INFORMATION

DANGER NOTIFICATION SERVER
(PROCESSING SERVER)

**4:** NOTIFICATION OF DANGER

**4:** NOTIFICATION OF DANGER

**1:** POSITIONAL EVENT

**1:** POSITIONAL EVENT

**1:** POSITIONAL EVENT

**1:** POSITIONAL EVENT

**2:** DANGER EVENT

NOT TARGETED FOR NOTIFICATION

CANDIDATE TARGETED FOR NOTIFICATION

**5:** IT IS JUDGED WHETHER THERE IS AN INFLUENCE OF DANGER, AND AN ALERT SCREEN IS DISPLAYED ON A DISPLAY IF THERE IS THE INFLUENCE

EP 2 891 985 A1

Fig. 9

EP 2 891 985 A1

Fig. 10

START

RECEIVE CEP RULE — S701

CEP RULE: EVENT CONDITION →
CONFIGURATION RULE: EVENT CONDITION — S702

EACH ATTRIBUTE CONDITION OF
CONFIGURATION RULE: EVENT CONDITION — S703

IS ATTRIBUTE CONDITION
RANGE SPECIFICATION? — S704

no

yes

UPDATE ATTRIBUTE VALUE — S705

RANGE SPECIFICATION ATTRIBUTE CONDITION IN CEP
RULE: EVENT CONDITION →
SUB-RULE FOR EXECUTION: EVENT CONDITION — S706

CEP RULE: ACTION → SUB-RULE FOR EXECUTION: ACTION — S707

SET CONFIGURATION RULE: ACTION — S708

END

# Fig. 11

EP 2 891 985 A1

# Fig. 12

APPLICATION (400)

REGISTRATION OF CEP RULE

RULE DISTRIBUTION APPARATUS (100)

REGISTRATION OF SUB-RULE/CONFIGURATION RULE

PROCESSING SERVER (200)

500-1 — REGISTRATION OF SUB-RULE

BASE STATION ● ● ●

500-m — REGISTRATION OF SUB-RULE

BASE STATION

NOTIFICATION OF EVENT

BROADCAST

BROADCAST

REGISTRATION OF SUB-RULE

TERMINAL (300-1)

TERMINAL (300-2)

● ● ●

TERMINAL (300-n)

EP 2 891 985 A1

# Fig. 13

DANGER NOTIFICATION SERVER
(PROCESSING SERVER)

2: SPECIFY VEHICLE WHICH IS A CANDIDATE TARGETED FOR NOTIFICATION OF DANGER INFORMATION

3: NOTIFICATION OF DANGER

1: DANGER EVENT

BASE STATION

BASE STATION

4: A VEHICLE IN THE NOTIFICATION AREA OF A BASE STATION IS NOTIFIED OF DANGER

5: IT IS JUDGED WHETHER THERE IS AN INFLUENCE OF DANGER, AND AN ALERT SCREEN IS DISPLAYED ON A DISPLAY IF THERE IS THE INFLUENCE

EP 2 891 985 A1

# Fig. 14

EP 2 891 985 A1

Fig. 15

EP 2 891 985 A1

Fig. 16

Fig. 17

**13**
PRIOR INFORMATION
ACQUIRING UNIT

**11**
RULE RECEIVING
UNIT

**15**
RULE DELETION
UNIT

**14**
PRIOR INFORMATION
STORAGE UNIT

**12**
RULE
GENERATION UNIT

EP 2 891 985 A1

Fig. 18

EP 2 891 985 A1

## INTERNATIONAL SEARCH REPORT

| International application No. |
| --- |
| PCT/JP2013/004850 |

**A. CLASSIFICATION OF SUBJECT MATTER**
*G06F13/00*(2006.01)i, *G06F15/00*(2006.01)i

According to International Patent Classification (IPC) or to both national classification and IPC

**B. FIELDS SEARCHED**

Minimum documentation searched (classification system followed by classification symbols)
G06F13/00, G06F15/00

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | Sawako MIKAMI, "Proposal and Evaluation of Scalable Stream Publish/Subscribe Platform", IEICE Technical Report, vol.111, no.9, 14 April 2011 (14.04.2011), pages 55 to 60 | 1-13 |
| A | JP 2003-289559 A (Seiko Epson Corp.), 10 October 2003 (10.10.2003), paragraphs [0008] to [0009], [0028] to [0029] (Family: none) | 1-13 |
| A | JP 2012-104943 A (Oki Electric Industry Co., Ltd.), 31 May 2012 (31.05.2012), paragraphs [0012] to [0013] & US 2012/0116724 A1 | 1-13 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 06 September, 2013 (06.09.13) | 17 September, 2013 (17.09.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

**Patent documents cited in the description**

- JP 2010262444 A

- JP 2012191260 A